# EUROPEAN PATENT SPECIFICATION

(11) **EP 4 438 227 B1**
(45) Date of publication and mention of the grant of the patent: **17.06.2026**
(21) Application number: 21969026.0
(22) Date of filing: 23.12.2021
(51) Int. Cl.: B23Q 11/08, B23Q 1/52

(54) **MACHINE TOOL AND MACHINE TOOL HANDLING METHOD**
WERKZEUGMASCHINE UND VERFAHREN ZUR HANDHABUNG EINER WERKZEUGMASCHINE
MACHINE-OUTIL ET PROCÉDÉ DE MANIPULATION DE MACHINE-OUTIL

(43) Date of publication of application: 02.10.2024
(73) Proprietor: Yamazaki Mazak Corporation, Niwa-gun, Aichi 480-0197 (JP)
(72) Inventor: TANAKA, Naoya, Niwa-gun, Aichi 480-0197 (JP); SUZUKI, Takeshi, Niwa-gun, Aichi 480-0197 (JP); HASEGAWA, Teppei, Niwa-gun, Aichi 480-0197 (JP); MATSUMOTO, Masatoshi, Niwa-gun, Aichi 480-0197 (JP)
(74) Representative: TBK
(86) International application number: PCT/JP2021/048011
(87) International publication number: WO 2023/119591

(56) References cited:
- WO-A1-2008/029485
- CN-A- 108 326 628
- DE-U1- 202011 103 226
- JP-A- 2004 009 256
- JP-A- 2006 175 527
- JP-A- 2019 206 064
- JP-A- H09 314 437
- JP-U- S5 723 945
- KR-A- 20140 095 160

## Description

The present invention relates to a machine tool according to the preamble of claim 1 and a method of handling a machine tool.

### Background Art

A machine tool provided with a cover is known.

As a related technique, JP H08-155782 A discloses a splash guard device of a machine tool. The splash guard device recited in JP H08-155782 A includes a center cover covering a front surface of a center of a table, a left cover covering a left side surface of the table, and a right cover covering a right side surface of the table. The splash guard device is dividable in three ways into the center cover, the left cover, and the right cover. The dividability of the splash guard device makes the splash guard device easy to transport.

CN 108 326 628 A shows a generic machine tool according to the preamble of claim 1, comprising: a table configured to support a workpiece and move in a first direction and a second direction opposite to the first direction; a tool support configured to support a tool for machining the workpiece; a mover configured to move the table; a first wall provided further in the first direction than the table and having a first opening; a first cover protruding further in the first direction than the first wall through the first opening; and a first support member supporting the first cover such that the first cover is tiltable to decrease an amount of protrusion of the first cover relative to the first wall, wherein the first cover is changeable in position between: a first position at which the first opening of the first wall is closed; and a second position at which the amount of protrusion of the first cover in the first direction relative to the first wall is decreased.

### Summary of Invention

The object of the present invention is to further develop a machine tool according to the preamble of claim 1 and to provide a method of handling a machine tool, such that a workpiece machining region of the machine tool can be suitably used during transportation and the size of the machine tool is further reduced.

The object of the present invention is achieved by a machine tool having the features of claim 1 and by a method of handling a machine tool having the features of claim 9.

Further advantageous developments of the present invention are defined in the dependent claims.

It is an advantage of the present invention to provide a machine tool that can be compact in size during transportation and a method of handling a machine tool for making the machine tool compact in size during transportation.

It is another advantage of the present invention to provide a technique that enables machine tools to be transported on general-purpose containers or smaller size transportation vehicles and thus contributes to decarbonization and SDGs.

According to an effect of the present invention, a machine tool is provided that can be compact in size during transportation, and a method of handling a machine tool is provided such that the method makes the machine tool compact in size during transportation. By realizing machine-tool compactness in size during transportation, the present invention contributes to decarbonization and SDGs.

### Brief Description of Drawings

[FIG. 1] FIG. 1 is a cross-sectional view of a machine tool according to a first embodiment, schematically illustrating the machine tool.
[FIG. 2] FIG. 2 is a cross-sectional view of the machine tool according to the first embodiment, schematically illustrating the machine tool.
[FIG. 3] FIG. 3 is a cross-sectional view of the machine tool according to the modification of the first embodiment, schematically illustrating the machine tool.
[FIG. 4] FIG. 4 is a front view of a machine tool according to a second embodiment, schematically illustrating the machine tool.
[FIG. 5] FIG. 5 is a front view of the machine tool according to the second embodiment, schematically illustrating the machine tool.
[FIG. 6] FIG. 6 is a perspective view of the machine tool according to the second embodiment, schematically illustrating the machine tool.
[FIG. 7] FIG. 7 is a perspective view of the machine tool according to the second embodiment, schematically illustrating the machine tool.
[FIG. 8] FIG. 8 is a top view of the machine tool according to the second embodiment, schematically illustrating main configurations of the machine tool.
[FIG. 9] FIG. 9 is a side view of the machine tool according to the second embodiment, schematically illustrating main configurations of the machine tool.
[FIG. 10] FIG. 10 is a top view of the machine tool according to the second embodiment, schematically illustrating main configurations of the machine tool.
[FIG. 11] FIG. 11 is a front view of the machine tool according to the second embodiment, schematically illustrating the machine tool.
[FIG. 12] FIG. 12 is a front view of the machine tool according to the second embodiment, schematically illustrating the machine tool.
[FIG. 13] FIG. 13 is a cross-sectional view of a first support member and a first cover, schematically illustrating a state in which the first support member supports the first cover.
[FIG. 14] FIG. 14 is a cross-sectional view of the first support member and the first cover, schematically illustrating a state in which the first support member supports the first cover.
[FIG. 15] FIG. 15 is an enlarged view of a part indicated by circle D1 in FIG. 13.
[FIG. 16] FIG. 16 is an enlarged view of a part indicated by circle D2 in FIG. 14.
[FIG. 17] FIG. 17 is an enlarged view of a part indicated by circle D3 in FIG. 14.
[FIG. 18] FIG. 18 is a perspective view of the machine tool, schematically illustrating some parts of the machine tool.
[FIG. 19] FIG. 19 is a perspective view of the machine tool, schematically illustrating some parts of the machine tool.
[FIG. 20] FIG. 20 is a perspective view of the machine tool, schematically illustrating some parts of the machine tool.
[FIG. 21] FIG. 21 schematically illustrates a state in which a transporting step is being performed.
[FIG. 22] FIG. 22 is an example flowchart of a method, according to an embodiment, of handling a machine tool.

### Description of Embodiments

By referring to the accompanying drawings, description will be made with regard to a machine tool 1 according to an embodiment and with regard to a method, according to an embodiment, of handling the machine tool 1. It is noted that in the following description of the embodiments, identical reference numerals are used to denote identical portions, members, or components having identical functions, and redundant description of identical portions, members, or components will be eliminated or minimized.

### (Definitions of Directions)

In this specification, the terms "upward", "up", and "above" each refer to a direction oriented upward, from a lower portion, and the terms "downward", "down", and "below" each refer to a direction oriented downward, from an upper position. In this specification, the term "side" refers to a lateral direction (in other words, a direction other than "upward", "up", "above", "downward", "down", and "below").

### (First Embodiment)

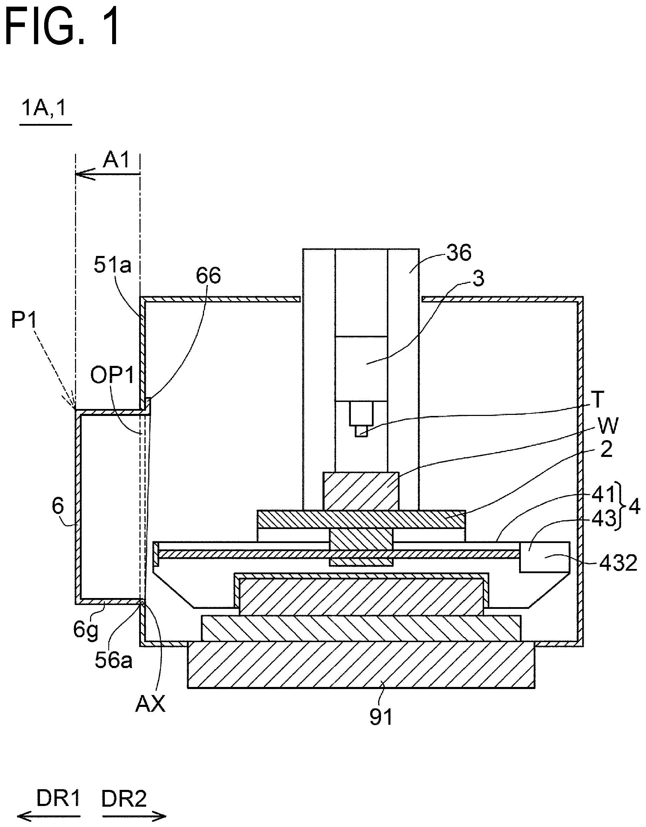

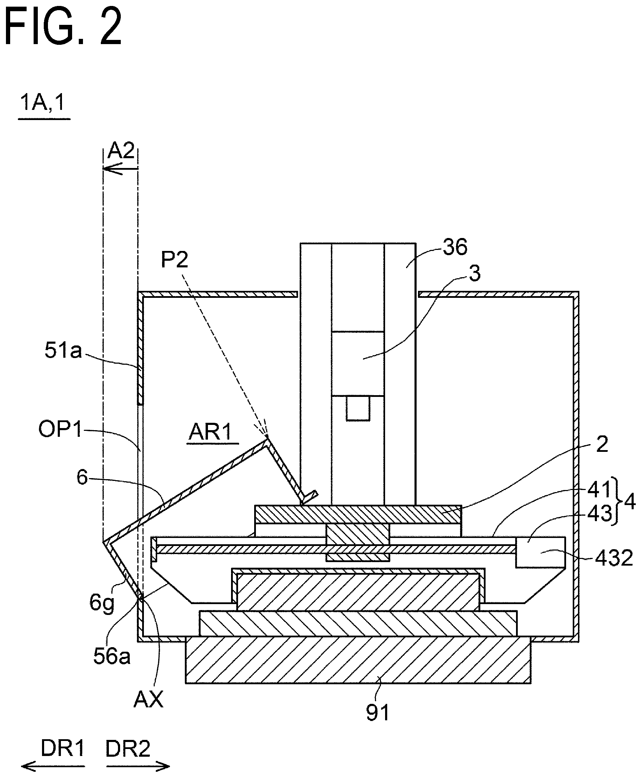

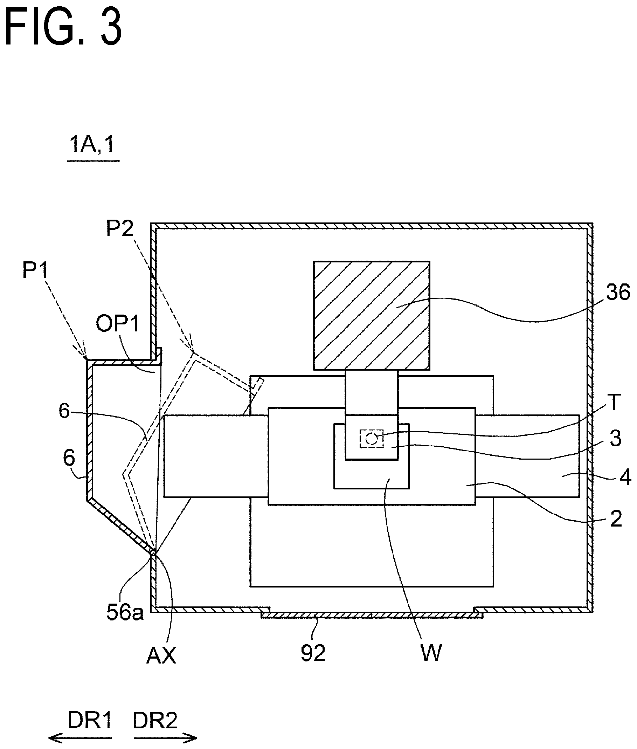

By referring to FIGs. 1 to 3, a machine tool 1A according to a first embodiment will be described. FIGs. 1 and 2 each are a cross-sectional view of the machine tool 1A according to the first embodiment, schematically illustrating the machine tool 1A. It is to be noted that FIG. 1 illustrates a state in which a first cover 6 is positioned at a first position P1, and FIG. 2 illustrates a state in which the first cover 6 is positioned at a second position P2. FIG. 3 is a cross-sectional view of the machine tool 1A according to a modification of the first embodiment, schematically illustrating the machine tool 1A.

The machine tool 1A according to the first embodiment includes a table 2, a tool support 3, a mover 4, a first wall 51a, the first cover 6, and a first support member 56a.

The table 2 supports a workpiece W (in other words, a to-be-worked object). In the example illustrated in FIG. 1, the table 2 is movable in a first direction *DR1,* and is movable in a second direction *DR2*, which is opposite to the first direction *DR1.* It is to be noted that the first direction *DR1* is a direction in which the table 2 moves toward the first cover 6, and the second direction *DR2* is a direction in which the table 2 moves away from the first cover 6. In the example illustrated in FIG. 1, the first direction *DR1* and the second direction *DR2* each are a direction parallel to a horizontal direction.

The tool support 3 supports a tool T, which is for machining the workpiece W. The tool support 3 is movable in, for example, a direction parallel to a vertical direction.

The mover 4 moves the table 2. In the example illustrated in FIG. 1, the mover 4 is capable of moving the table 2 in the first direction *DR1,* and is capable of moving the table 2 in the second direction *DR2*.
the first wall 51a (in other words, a first side wall) is provided further in the first direction *DR 1* than the table 2. the first wall 51a has a first opening OP1. the first wall 51a protects the table 2 and/or the tool support 3 on one side (more specifically, on the first direction *DR1* side).

The first cover 6 protrudes further in the first direction *DR1* than the first wall 51a through the first opening OP1. The first cover 6 prevents scattering of chips, coolant, and other substances in the first direction *DR1* beyond the first cover 6. The first cover 6 also protects the table 2 and/or the mover 4 on one side (more specifically, on the first direction *DR1* side). As described later, the first cover 6 is tiltable and, as such, can be referred to as "first tiltable cover".

The first support member 56a supports the first cover 6 such that the first cover 6 is tiltable to decrease the amount of protrusion of the first cover 6 (the amount of protrusion in the first direction *DR1*) relative to the first wall 51a.

More specifically, the first support member 56a supports the first cover 6 while the first cover 6 is tilting from the first position P1 to the second position P2 (see FIG. 2). When the first cover 6 is positioned at the second position P2, the amount of protrusion by which the first cover 6 protrudes in the first direction *DR1* relative to the first wall 51a is defined as second amount of protrusion A2 (see FIG. 2). When the first cover 6 is positioned at the first position P1, the amount of protrusion by which the first cover 6 protrudes in the first direction *DR1* relative to the first wall 51a is defined as first amount of protrusion A1 (see FIG. 1). The second amount of protrusion A2 is smaller than the first amount of protrusion A1.

In the example illustrated in FIG. 1, when the first cover 6 is positioned at the first position P1, the first opening OP1 of the first wall 51a is closed by the first cover 6. Hence, the first position P1 can be referred to as closed position. In the example illustrated in FIG. 2, when the first cover 6 is positioned at the second position P2, the first cover 6 is partially housed in the second direction *DR2* relative to the first wall 51a. Hence, the second position P2 can be referred to as housing position.

In the machine tool 1A according to the first embodiment, the first cover 6 can be caused to tilt in a direction in which the amount of protrusion of the first cover 6 is decreased relative to the first wall 51a. By decreasing the amount of protrusion of the first cover 6 in the first direction *DR1* relative to the first wall 51a, the machine tool 1A as a whole is made compact in size (more specifically, size of the machine tool 1A during transportation). This configuration enables the machine tool 1A to be transported on general-purpose containers or smaller size transportation vehicles, and thus contributes to decarbonization and SDGs.

Also in the machine tool 1A according to the first embodiment, the first cover 6 is supported by the first support member 56a in a state in which the amount of protrusion of the first cover 6 relative to the first wall 51a is decreased. In other words, during transportation of the machine tool 1A, it is not necessary to remove the first cover 6 from the first support member 56a. As a result, after transportation of the machine tool 1A, the machine tool 1A can be assembled quickly and easily. More specifically, the first support member 56a serves as a fulcrum on which the first cover 6 tilts in the direction to increase the amount of protrusion. Thus, the first cover 6 is changeable in position from the second position P2 (in other words, from the housing position) to the first position P1 (in other words, to the closed position).

In the state in which the position of the first cover 6 is the first position P1, the first cover 6 protrudes further in the first direction *DR1* than the first wall 51a. This makes the machine tool 1A larger in inner region. As a result, in the first embodiment, the machine tool 1A can be compact in size during transportation without compromising specifications of the machine tool 1A (such as the size of the table 2 and the movement stroke of the table 2 in a direction parallel to the first direction *DR1*)*.*

As has been described hereinbefore, the first embodiment enables the machine tool 1A to be compact in size during transportation, ensures easiness in the assembly of the machine tool 1A, and enables specifications of the machine tool 1A to be maintained.

In the examples illustrated in FIGs. 1 and 2, the first cover 6 has a tilting axis AX. The tilting axis AX is parallel to a horizontal direction, and is provided at a lower end portion of the first cover 6. In the first embodiment (or in a second embodiment, described later), however, the tilting axis AX of the first cover 6 will not be limited to being parallel to the horizontal direction. The tilting axis AX of the first cover 6 also will not be limited to being provided at the lower end portion of the first cover 6. For example, as exemplified in FIG. 3, the tilting axis AX of the first cover 6 may be parallel to the vertical direction. In other words, the first cover 6 may be tiltable about an axis parallel to the vertical direction.

### (Second Embodiment)

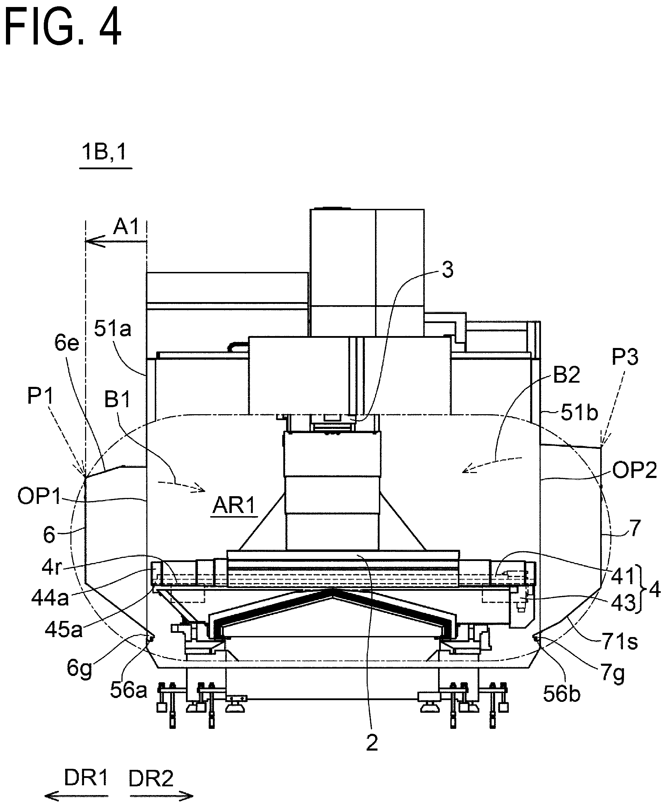

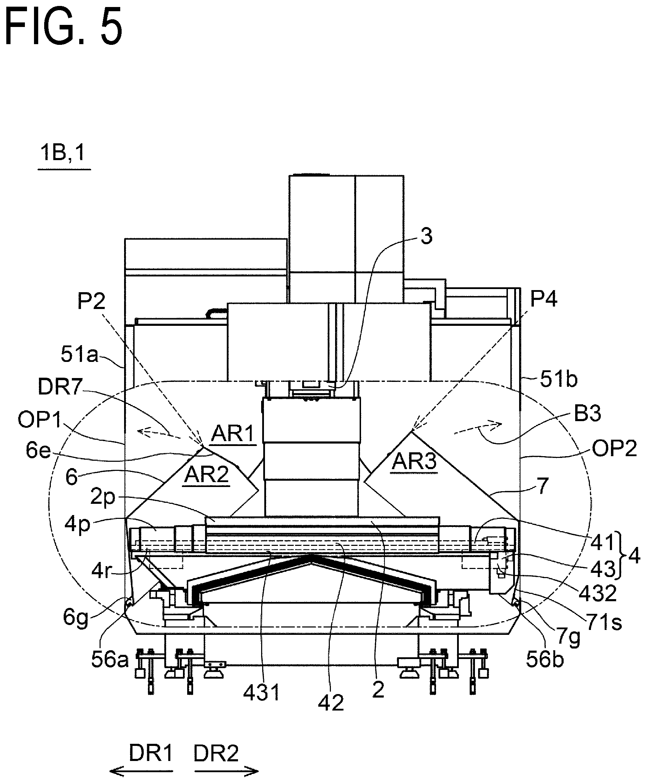

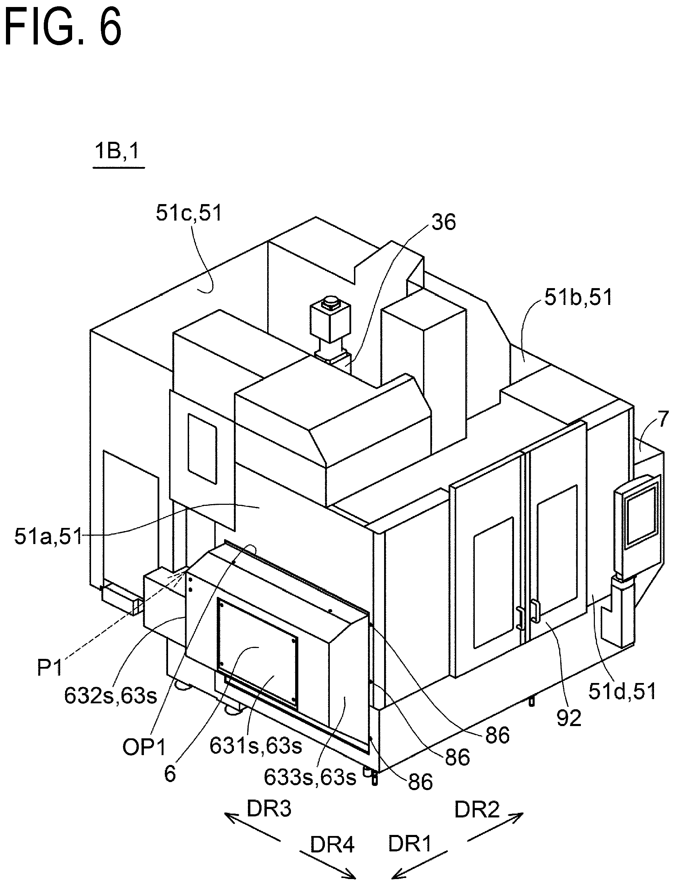

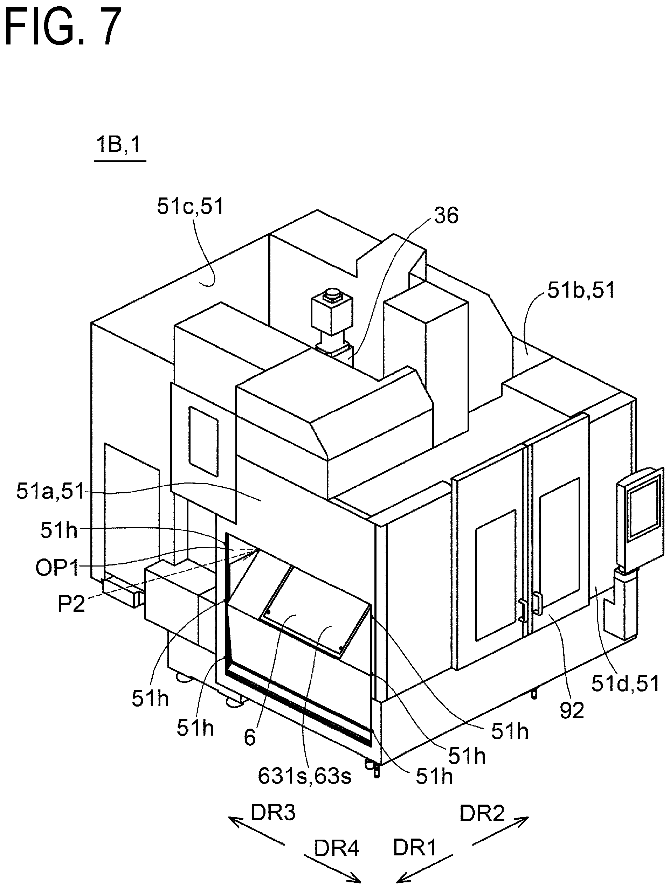

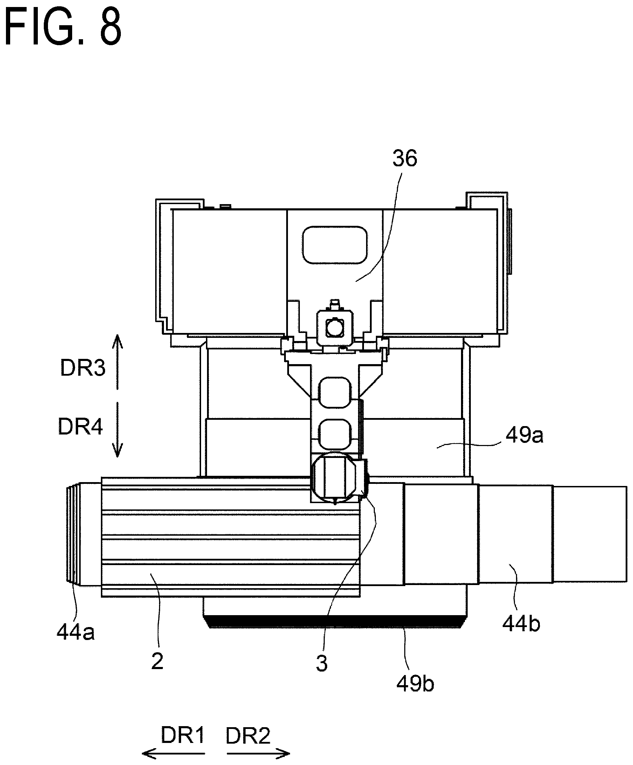

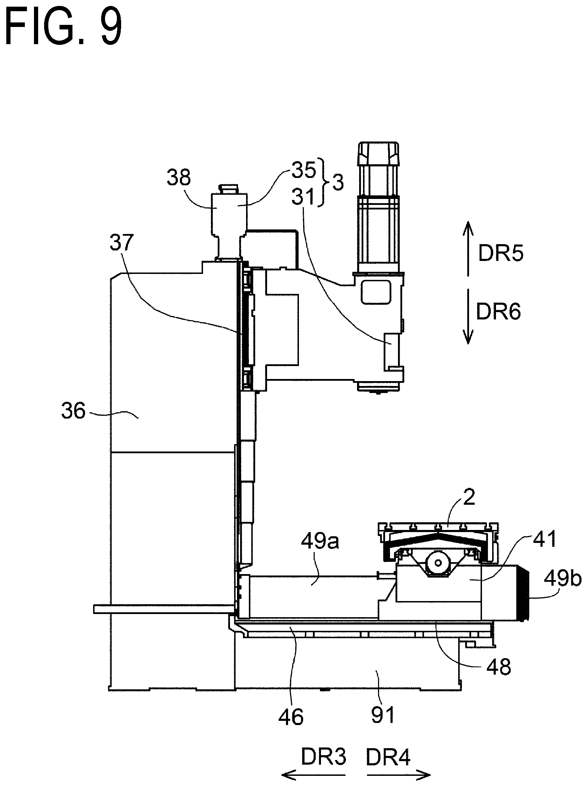

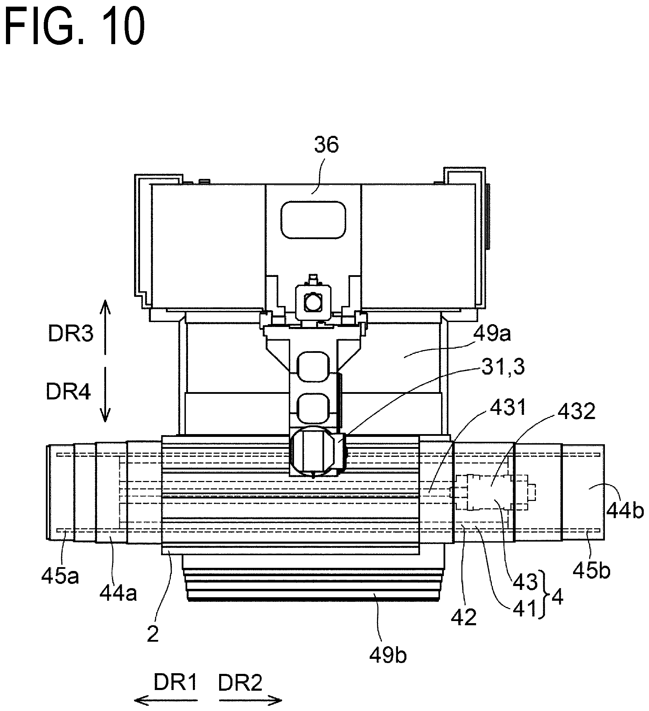

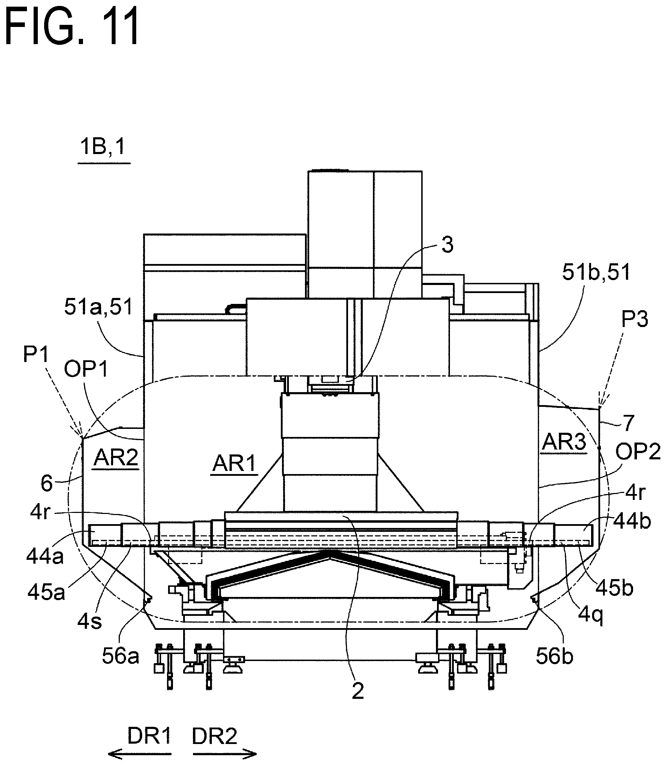

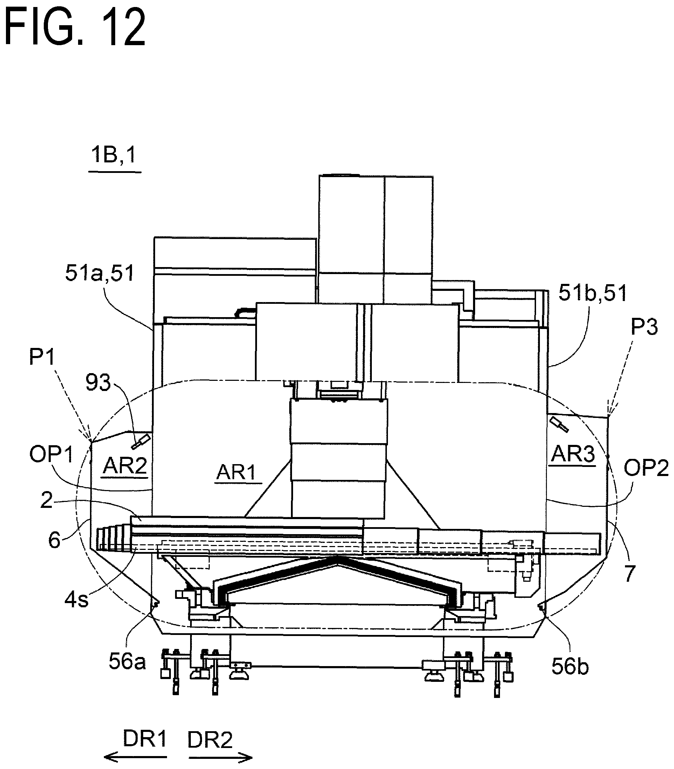

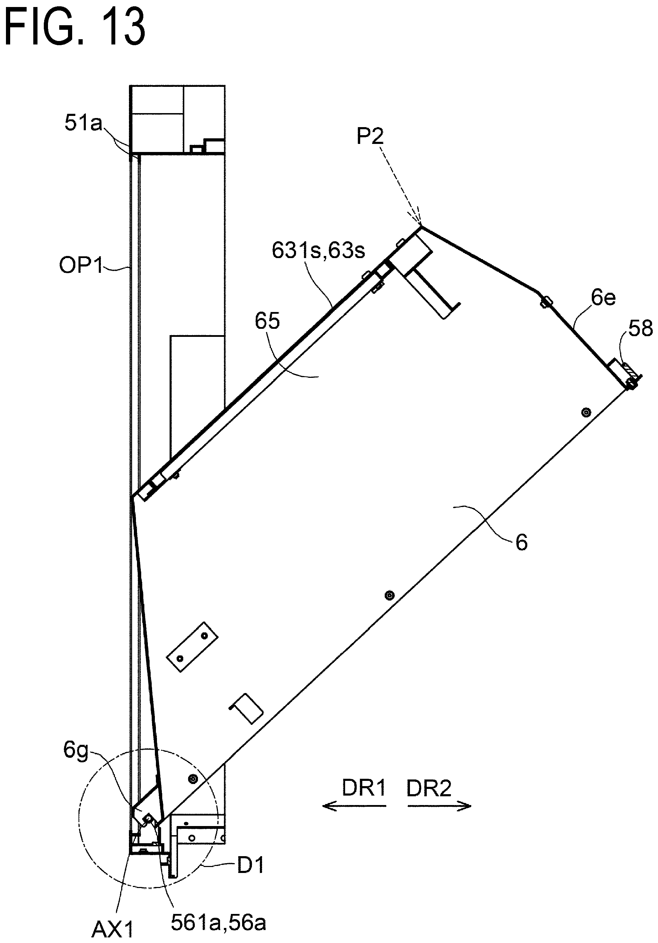

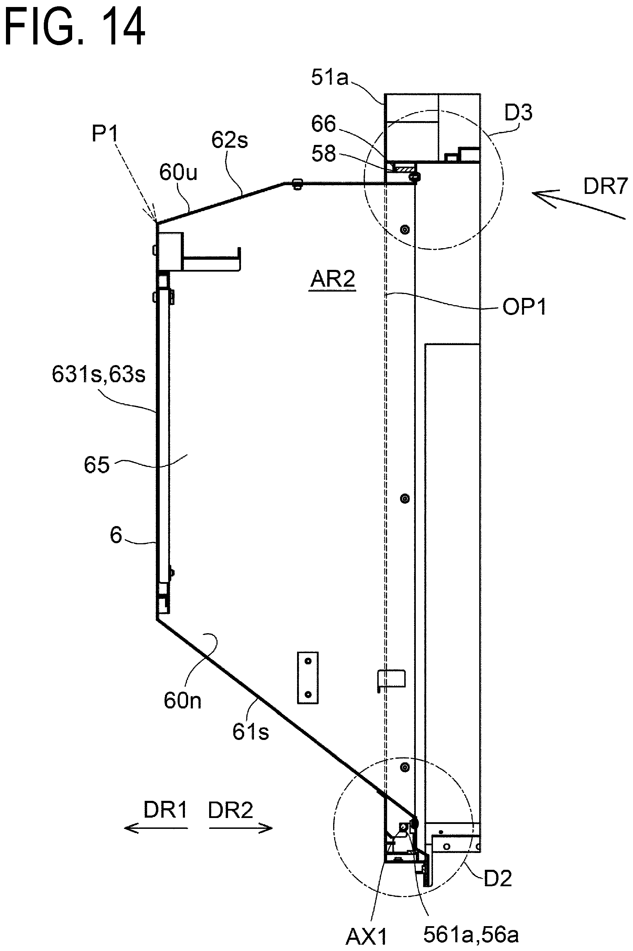

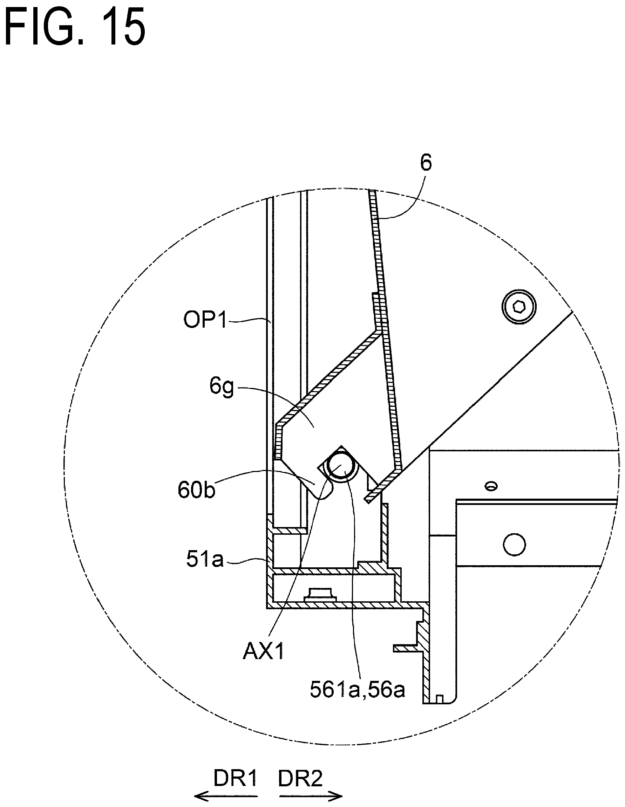

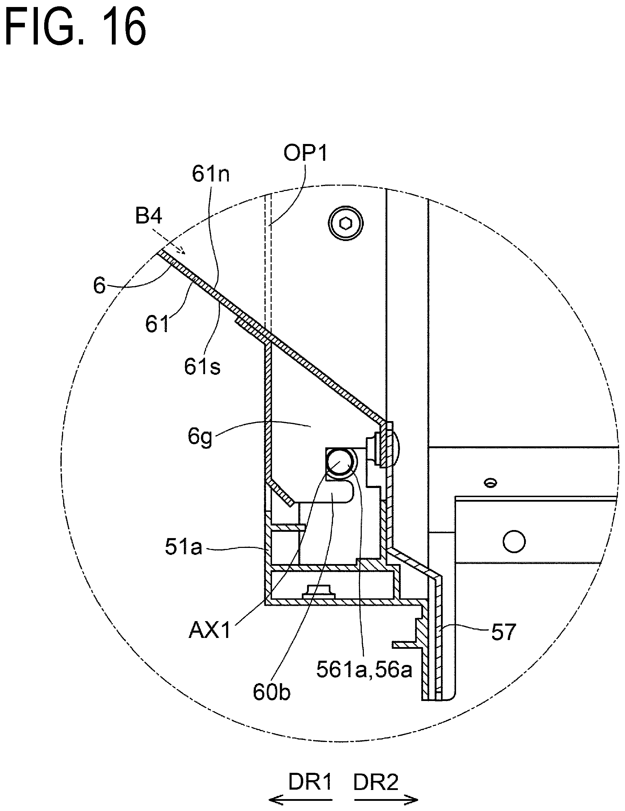

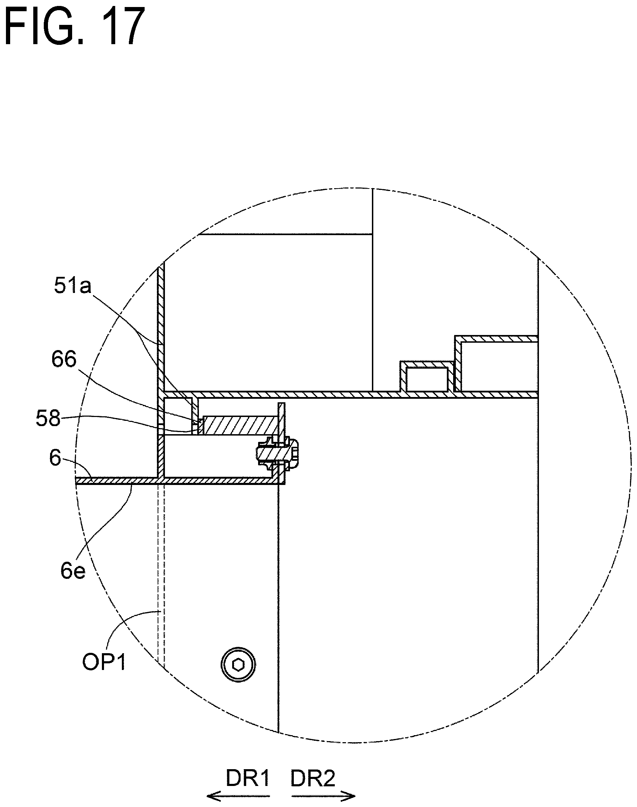

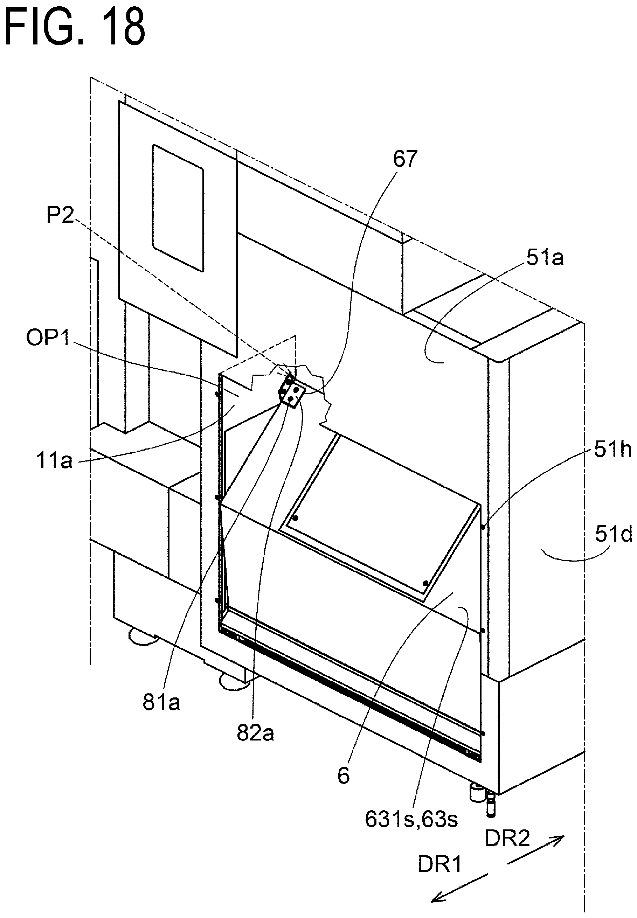

By referring to FIGs. 4 to 20, a machine tool 1B according to the second embodiment will be described. FIGs. 4 and 5 each are a front view of the machine tool 1B according to the second embodiment, schematically illustrating the machine tool 1B. FIG. 4 illustrates a state in which the first cover 6 is positioned at the first position P1, and FIG. 5 illustrates a state in which the first cover 6 is positioned at the second position P2. FIGs. 6 and 7 each are a perspective view of the machine tool 1B according to the second embodiment, schematically illustrating the machine tool 1B. FIG. 6 illustrates a state in which the first cover 6 is positioned at the first position P1, and FIG. 7 illustrates a state in which the first cover 6 is positioned at the second position P2. FIG. 8 is a top view of the machine tool 1B according to the second embodiment, schematically illustrating main configurations (excluding configurations such as the first cover 6, a second cover 7, and a wall 51) of the machine tool 1B. FIG. 9 is a side view of the machine tool 1B according to the second embodiment, schematically illustrating the main configurations (excluding configurations such as the first cover 6, the second cover 7, and the wall 51) of the machine tool 1B. FIG. 10 is a top view of the machine tool 1B according to the second embodiment, schematically illustrating the main configurations (excluding configurations such as the first cover 6, the second cover 7, and the wall 51) of the machine tool 1B. FIGs. 11 and 12 each are a front view of the machine tool 1B according to the second embodiment, schematically illustrating the machine tool 1B. FIGs. 13 and 14 each are a cross-sectional view of the first support member 56a and the first cover 6, schematically illustrating a state in which the first support member 56a supports the first cover 6. FIG. 15 is an enlarged view of a part indicated by circle D1 in FIG. 13. FIG. 16 is an enlarged view of a part indicated by circle D2 in FIG. 14. FIG. 17 is an enlarged view of a part indicated by circle D3 in FIG. 14. FIGs. 18 to 20 each are a perspective view of the machine tool 1B, schematically illustrating some parts of the machine tool 1B. It is to be noted that in FIGs. 4, 5, 11, and 12, a part of the machine tool 1B (the part surrounded by a single-dashed elongated circle) is cut away to show an internal configuration of the machine tool 1B.

In the second embodiment, the following description will mainly focus on those respects in which the second embodiment is different from the first embodiment, and those respects already described in the first embodiment will not be described in the second embodiment to avoid redundancy. Thus, it will be readily appreciated that those respects that are not explicitly described in the second embodiment but are described in the first embodiment apply in the second embodiment.

As exemplified in FIG. 4, the machine tool 1B according to the second embodiment includes (1) the table 2, which supports a workpiece and is movable in the first direction *DR1* and the second direction *DR2*, which is opposite to the first direction *DR1*, (2) the tool support 3, which supports a tool for machining the workpiece, (3) the mover 4, which moves the table 2, (4) the first wall 51a, which is provided further in the first direction DR *1* than the table 2 and has the first opening OP1, (5) the first cover 6, which protrudes further in the first direction *DR1* than the first wall 51a through the first opening OP1, and (6) the first support member 56a, which supports the first cover 6 such that the first cover 6 is tiltable to decrease the amount of protrusion of the first cover 6 relative to the first wall 51a.

With this configuration, the second embodiment provides effects similar to the effects of the first embodiment.

### (Optional Configurations)

Next, by referring to FIGs. 4 to 20, optional configurations employable in the second embodiment will be described.

### (Change of Position of First Cover 6)

In the examples illustrated in FIGs. 6 and 7, the first cover 6 is changeable in position between the first position P1 (see FIG. 6) and the second position P2 (see FIG. 7). At the first position P1, the first opening OP1 of the first wall 51a is closed. At the second position P2, the amount of protrusion of the first cover 6 in the first direction *DR1* relative to the first wall 51a is decreased. In the example illustrated in FIG. 7, when the first cover 6 is positioned at the second position P2, a part of the first opening OP1 of the first wall 51a is open, instead of being closed by the first cover 6.

When the first cover 6 is positioned at the second position P2 (see FIG. 5), the amount of protrusion by which the first cover 6 protrudes in the first direction *DR1* relative to the first wall 51a is defined as second amount of protrusion A2 (in the example illustrated in FIG. 5, the second amount of protrusion A2 is zero, and thus there is no indication of "A2"). When the first cover 6 is positioned at the first position P1 (see FIG. 4), the amount of protrusion by which the first cover 6 protrudes in the first direction *DR1* relative to the first wall 51a is defined as first amount of protrusion A1. In this case, in the examples illustrated in FIGs. 4 and 5, the second amount of protrusion A2 is smaller than the first amount of protrusion A1.

In the example illustrated in FIG. 5, when the first cover 6 is positioned at the second position P2, the first cover 6 is entirely housed in the second direction *DR2* relative to the first wall 51a. Alternatively, similarly to the example illustrated in FIG. 2, when the first cover 6 is positioned at the second position P2, one part of the first cover 6 may protrude further in the first direction *DR1* than the first wall 51a, and the other part of the first cover 6 may be housed in the second direction *DR2* relative to the first wall 51a. In other words, the second amount of protrusion A2 may be a value larger than zero and smaller than the first amount of protrusion A1.

In the example illustrated in FIG. 4, as indicated by a broken-line arrow B1, the first cover 6 is tiltable from the first position P1 toward the second position P2 to cross a workpiece machining region AR1. More specifically, while the first cover 6 is tilting from the first position P1 toward the second position P2, the first cover 6 crosses the workpiece machining region AR1 of the machine tool 1B. The workpiece machining region AR1 becomes a temporary unused region during transportation of the machine tool. In the examples illustrated in FIGs. 4 and 5, the workpiece machining region AR1 can be utilized as an unused region in which the first cover 6 tilts to the second position P2. Thus, it is not necessary to provide a dedicated space or a dedicated movement passage for the tilting of the first cover 6. Also, for the first cover 6 to tilt, it is not necessary to withdraw any member from the movement passage of the first cover 6 or a smaller number of members needs to be withdrawn from the movement passage of the first cover 6.

It is to be noted that in this specification, the "workpiece machining region AR1" refers to a region that is a part of the region immediately above the table 2 and that is reachable by a tool supported by the tool support 3. It is also to be noted that in a case where the table 2 is movable in a horizontal direction, the region immediately above the table 2 refers to a region immediately above the entire movable range of the table 2.

### (Table 2)

In the example illustrated in FIG. 8, the table 2 is movable in the first direction *DR1* and the second direction *DR2*, which is opposite to the first direction *DR1.* Additionally, the table 2 may be movable in a direction different from a direction parallel to the first direction *DR1.* In the example illustrated in FIG. 8, the table 2 is movable in a third direction *DR3*, which is perpendicular to the first direction *DR1,* and in a fourth direction *DR4,* which is opposite to the third direction *DR3.* It is to be noted that in the example illustrated in FIG. 8, in the first direction *DR1,* the second direction *DR2*, the third direction *DR3*, and the fourth direction *DR4* are parallel to a horizontal direction.

### (Tool Support 3)

In the example illustrated in FIG. 9, the tool support 3 includes a tool support member 31 and a support member mover 35. The tool support member 31 supports a tool. The support member mover 35 moves the tool support member 31. In the example illustrated in FIG. 9, the tool support member 31 is movable in directions parallel to the vertical direction (more specifically, in a vertically upward direction *DR5* and a vertically downward direction *DR6).* The support member mover 35 moves the tool support member 31 in a direction parallel to the vertical direction. The support member mover 35 includes a linear guide 37 and a drive 38. The linear guide 37 guides the tool support member 31 to move in the directions parallel to the vertical direction. The drive 38 applies moving force to the tool support member 31. In the example illustrated in FIG. 9, the linear guide 37 is provided at a column 36. The column 36 is fixed to a base 91 of the machine tool 1B, and is provided further in the third direction *DR3* than the table 2.

### (Mover 4)

In the example illustrated in FIG. 10, the mover 4, which moves the table 2, includes a table support member 41 and a first drive 43. The table support member 41 supports the table 2 in a manner in which the table 2 is movable in a direction parallel to the first direction *DR1.* The first drive 43 (for example, a motor) applies moving force to the table 2 in the direction parallel to the first direction *DR1.*

In the example illustrated in FIG. 10, the table support member 41 includes a first linear guide 42 (such as a first track). The first linear guide 42 guides the table 2 to move in the direction parallel to the first direction *DR1.* In this case, the table 2 is linearly movable along the first linear guide 42.

The first drive 43 includes, for example, a ball screw 431 and a motor 432. The motor 432 drives the ball screw 431 into rotation. Alternatively, the first drive 43 may include a linear motor.

As exemplified in FIG. 10, the mover 4, which moves the table 2, may include a first expandable-contractable cover 44a.

The first expandable-contractable cover 44a is provided on the first direction *DR1* side relative to the table 2 to prevent foreign matter (such as workpiece chips, coolant, and other substances) from entering the space between the table 2 and the table support member 41. The first expandable-contractable cover 44a expands as the table 2 moves in the second direction *DR2*, and contracts as the table 2 moves in the first direction *DR1.* In order to cause the first expandable-contractable cover 44a to expand and contract as the table 2 moves, one end portion of the first expandable-contractable cover 44a may be mounted on the table 2, and another end portion of the first expandable-contractable cover 44a may be mounted on the table support member 41 or first aid tracks 45a. The first aid tracks 45a are fixed to the table support member 41.

In the example illustrated in FIG. 10, the mover 4, which moves the table 2, includes the first aid tracks 45a. The first aid tracks 45a aid the first expandable-contractable cover 44a in expanding and contracting in the direction parallel to the first direction *DR1.* In this case, the first expandable-contractable cover 44a smoothly expand and contract along the first aid tracks 45a.

As exemplified in FIG. 10, the mover 4, which moves the table 2, may include a second expandable-contractable cover 44b.

The second expandable-contractable cover 44b is provided on the second direction *DR2* side relative to the table 2 to prevent foreign matter (such as workpiece chips, coolant, and other substances) from entering the space between the table 2 and the table support member 41. The second expandable-contractable cover 44b expands as the table 2 moves in the first direction *DR1,* and contracts as the table 2 moves in the second direction *DR2.* In order to cause the second expandable-contractable cover 44b to expand and contract as the table 2 moves, one end portion of the second expandable-contractable cover 44b may be mounted on the table 2, and another end portion of the second expandable-contractable cover 44b may be mounted on the table support member 41 or second aid tracks 45b. The second aid tracks 45b are fixed to the table support member 41.

In the example illustrated in FIG. 10, the mover 4, which moves the table 2, includes the second aid tracks 45b. The second aid tracks 45b aid the second expandable-contractable cover 44b in expanding and contracting in a direction parallel to the second direction *DR2.* In this case, the second expandable-contractable cover 44b smoothly expand and contract along the second aid tracks 45b.

As exemplified in FIG. 9, the mover 4, which moves the table 2, may include a second table support member 46 and a second drive 48. In the example illustrated in FIG. 9, the second table support member 46 supports, via the table support member 41, the table 2 in a manner in which the table 2 is movable in a direction parallel to the third direction *DR3*. The second drive 48 applies moving force to the table support member 41 in the direction parallel to the third direction *DR3*.

As exemplified in FIG. 10, the mover 4, which moves the table 2, may include a third expandable-contractable cover 49a and/or a fourth expandable-contractable cover 49b.

The third expandable-contractable cover 49a is provided on the third direction *DR3* side relative to the table support member 41 to prevent foreign matter (such as workpiece chips, coolant, and other substances) from entering the space between the table support member 41 and the second table support member 46. The third expandable-contractable cover 49a expands as the table 2 and the table support member 41 move in the fourth direction *DR4,* and contracts as the table 2 and the table support member 41 move in the third direction *DR3*.

The fourth expandable-contractable cover 49b is provided on the fourth direction *DR4* side relative to the table support member 41 to prevent foreign matter (such as workpiece chips, coolant, and other substances) from entering the space between the table support member 41 and the second table support member 46. The fourth expandable-contractable cover 49b expands as the table 2 and the table support member 41 move in the third direction *DR3,* and contracts as the table 2 and the table support member 41 move in the fourth direction *DR4.*

### (Position of First Cover 6 in Relation to Positions of Table 2 and Mover 4)

In the example illustrated in FIG. 5, when the first cover 6 is positioned at the second position P2 (in other words, at the housing position), the first cover 6 is partially provided immediately above the table 2 and the mover 4 (for example, the first linear guide 42, which guides the table 2 to move, the ball screw 431, or other elements). In this case, at least a part of the workpiece machining region AR1, which exists immediately above the table 2 and the mover 4, can be utilized to partially or entirely house the first cover 6 further in the second direction *DR2* than the first wall 51a.

In the example illustrated in FIG. 5, the first cover 6 positioned at the second position P2 contains at least one of a part of the mover 4 and a part of the table 2. Specifically, when the first cover 6 is positioned at the second position P2, at least one of a part 4p of the mover 4 and a part 2p of the table 2 is provided in an inner region AR2 of the first cover 6. In this case, when the first cover 6 is positioned at the second position P2, the inner region AR2 of the first cover 6 is effectively utilized. In the example illustrated in FIG. 5, the first cover 6 positioned at the second position P2 contains both the part of the mover 4 and the part of the table 2. Alternatively, the first cover 6 positioned at the second position P2 may contain one of the part of the mover 4 and the part of the table 2.

While the first cover 6 is tilting from the first position P1 to the second position P2, it is possible for the first cover 6 to interfere with a part of the mover 4. In this case, the part of the mover 4 that the first cover 6 may possibly interfere with is configured to be removable from a rest part of the mover 4.

In the example illustrated in FIG. 4, a part of the mover 4 (for example, at least a part of the first expandable-contractable cover 44a and/or at least a part of the first aid tracks 45a) is removed from the rest part, 4r, of the mover 4. In this case, the first cover 6 is caused to tilt from the first position P1 to the second position P2 in a state in which the part of the mover 4 is removed from the rest part of the mover 4. As exemplified in FIG. 11, the removed part, 4s, of the mover 4 is caused to be mounted on the rest part 4r of the mover 4 before the machine tool 1B is used. More specifically, in a state in which the first cover 6 is positioned at the first position P1, the part 4s of the mover 4 is provided in the inner region AR2 of the first cover 6.

As exemplified in FIG. 12, a part of the table 2 that has moved furthest in the first direction *DR1* may be providable in the inner region AR2 of the first cover 6 positioned at the first position P1.

In a case where the part 4s of the mover 4 or a part of the table 2 is providable in the inner region AR2 of the first cover 6 positioned at the first position P1, the inner region AR2 can be used to expand the movable range of the table 2 in the direction parallel to the first direction *DR1.*

Additionally, as exemplified in FIG. 12, when the first cover 6 is positioned at the first position P1, a nozzle 93 may be provided in the inner region AR2 of the first cover 6. Through the nozzle 93, cleaning solution to wash away coolant attached to the first cover 6 is ejected.

### (First Support Member 56a)

In the examples illustrated in FIGs. 4 and 5, the first support member 56a supports the lower end portion, 6g, of the first cover 6 such that the first cover 6 is tiltable. In this case, when the first cover 6 tilts, the amount of movement of the lower end portion 6g of the first cover 6 is smaller than the amount of movement of an upper end portion 6e of the first cover 6. Also, in a case where the amount of movement of the lower end portion 6g of the first cover 6 is relatively small, the first cover 6 can be caused to tilt more easily in a manner to avoid interference between the lower end portion 6g of the first cover 6 and the table 2 and the mover 4.

In the examples illustrated in FIGs. 4 and 5, the workpiece machining region AR1 exists immediately above the table 2 and the mover 4 of the machine tool 1B. By utilizing the workpiece machining region AR1, adverse effects caused by the relatively large amount of movement of the upper end portion 6e of the first cover 6 are not actualized. In other words, in the examples illustrated in FIGs. 4 and 5, by utilizing the workpiece machining region AR1, the upper end portion 6e of the first cover 6 can be moved spaciously.

In the examples illustrated in FIGs. 13 and 14, the first support member 56a supports the first cover 6 (more specifically, the lower end portion 6g of the first cover 6) such that the first cover 6 is tiltable about a first axis AX1. An example of the first support member 56a is a pin member 561a. The pin member 561a supports the first cover 6 such that the first cover 6 is tiltable. In the examples illustrated in FIGs. 13 and 14, the pin member 561a defines the first axis AX1, which is a tilting axis of the first cover 6. In the examples illustrated in FIGs. 13 and 14, the first axis AX1 is an axis parallel to a horizontal direction.

As exemplified in FIG. 15, the lower end portion 6g of the first cover 6 may include a first hook 60b. The first hook 60b is meshable and de-meshable with and from the pin member 561a. In a case where the first cover 6 includes the first hook 60b, the first cover 6 can be easily mounted, easily removed, or easily replaced. The first hook 60b also permits the first cover 6 to tilt about the pin member 561a. With this configuration, the first hook 60b makes the first cover 6 easily attachable and detachable to and from the pin member 561a without blocking the tilting of the first cover 6 about the pin member 561a. For example, in the example illustrated in FIG. 15 (in other words, in the state in which the first cover 6 is positioned at the second position P2), the lower end portion 6g of the first cover 6 can be lifted upward (for example, diagonally upward) to remove the first cover 6 from the pin member 561a. It is to be noted that since weight is acting on the first cover 6, the first cover 6 does not come off from the pin member 561a unless the first cover 6 is lifted upward.

### (Lower Fluid Leakage Guard 57)

As exemplified in FIG. 16, the machine tool 1B may include a lower fluid leakage guard 57. The lower fluid leakage guard 57 is provided at the lower end portion 6g of the first cover 6. The lower fluid leakage guard 57 prevents a leakage of coolant to outside the machine tool through the gap between the lower end portion 6g of the first cover 6 and the first wall 51a.

In the example illustrated in FIG. 16, the lower fluid leakage guard 57 is attachable and detachable to and from the lower end portion 6g of the first cover 6. More specifically, the lower fluid leakage guard 57 is attached to the lower end portion 6g of the first cover 6 after the first cover 6 has tilted from the second position P2 (in other words, from the housing position) to the first position P1 (in other words, to the closed position to close the first opening OP1).

### (Upper Fluid Leakage Guard 58)

As exemplified in FIG. 17, the machine tool 1B may include an upper fluid leakage guard 58. The upper fluid leakage guard 58 is provided at the upper end portion 6e of the first cover 6. The upper fluid leakage guard 58 prevents a leakage of coolant to outside the machine tool through the gap between the upper end portion 6e of the first cover 6 and the first wall 51a.

In the example illustrated in FIG. 13, the upper fluid leakage guard 58 is fixed to the upper end portion 6e of the first cover 6. In other words, when the first cover 6 tilts relative to the first support member 56a, the upper fluid leakage guard 58 tilts together with the first cover 6. As exemplified in FIG. 13, when the first cover 6 is positioned at the second position P2, the upper fluid leakage guard 58 is located away from the first wall 51a. As exemplified in FIG. 14, when the first cover 6 is positioned at the first position P1, the upper fluid leakage guard 58 is in contact with the first wall 51a.

### (Stopper 66)

In the example illustrated in FIG. 14, the first cover 6 includes a hollow protrusion 65 and a stopper 66. The protrusion 65 protrudes in the first direction *DR1* through the first opening OP1 of the first wall 51a. A tilting direction oriented from the second position P2 toward the first position P1 is defined as first tilting direction *DR7.* The stopper 66 prevents the first cover 6 from tilting in the first tilting direction DR7past the first position P1. In other words, the stopper 66 defines a tilting limitation position for the tilting of the first cover 6 in the first tilting direction *DR7.*

In the example illustrated in FIG. 17, the upper fluid leakage guard 58 serves as a part of the stopper 66. In other words, the upper fluid leakage guard 58 serves as one member that defines the tilting limitation position for the tilting of the first cover 6 in the first tilting direction *DR7.*

### (First Cover 6)

As exemplified in FIG. 14, the first cover 6 has an outer surface 60u and an inner surface 60n. The outer surface 60u is exposed to outside the machine tool. The inner surface 60n defines the inner region AR2 of the first cover 6. Also in the example illustrated in FIG. 14, the first cover 6 (more specifically, the outer surface 60u of the first cover 6) has a bottom surface 61s, an upper surface 62s, and a first end surface 631s, which is the first direction *DR1* side face. The first end surface 631s is a part of a side surface 63s of the first cover 6. As exemplified in FIG. 6, the side surface 63s of the first cover 6 may have a surface 632s and surface 633s, in addition to the first end surface 631s. The surface 632s is the third direction *DR3* side face. The surface 633s is the fourth direction *DR4* side face, which is opposite to the third direction *DR3* side face.

In the example illustrated in FIG. 14, a height of a position of the bottom surface 61s of the first cover 6 positioned at the first position P1 increases in the first direction *DR1.* In this case, the amount of protrusion of the first cover 6 in the first direction *DR1* relative to the first wall 51a can be easily decreased. For example, when the first cover 6 is moved from the first position P1 to the second position P2 (see FIG. 13), causing the first cover 6 to tilt by an angle smaller than 90 degrees about the first axis AX1 suffices (more specifically, by an angle smaller than 75 degrees or an angle smaller than 60 degrees). In the example illustrated in FIG. 13, the first cover 6 is caused to tilt by an angle smaller than 90 degrees from the first position P1 toward the second position P2. This configuration ensures that an entire part of the first end surface 631s of the first cover 6 (or a majority part of the first end surface 631s) is housed in the second direction *DR2* relative to the first wall 51a.

Also in a case where the height of the position of the bottom surface 61s of the first cover 6 increases in the first direction *DR1,* coolant that has reached the first cover 6 can be guided in the second direction *DR2* along a bottom wall 61 of the first cover 6 (more specifically, an inner surface 61n of the bottom wall 61), as exemplified in FIG. 16 (see broken-line arrow B4). In other words, coolant scattering toward the first cover 6 can be collected using the inclination of the bottom wall 61 of the first cover 6.

As has been described hereinbefore, in a case where the height of the position of the bottom surface 61s of the first cover 6 increases in the first direction *DR1,* the first cover 6 can be easily housed, ensuring that coolant can be easily collected.

In the example illustrated in FIG. 16, the first cover 6 includes, as its component, a plurality of plate members (for example, a plurality of metal plates). In other words, a plurality of plate members are connected together to form the first cover 6.

In the example illustrated in FIG. 18, the first cover 6 includes a fixation member 67. The fixation member 67 fixes the first cover 6 to the second position P2. In a case where the first cover 6 includes the fixation member 67, the machine tool 1B can be transported in a state in which the first cover 6 is fixed to the second position P2. In this case, the first cover 6 is prevented from rattling during transportation of the machine tool 1B.

In the example illustrated in FIG. 18, in a state in which the first cover 6 is positioned at the second position P2, the fixation member 67 is provided at a position where the fixation member 67 is accessible by a user through the first opening OP1 when the user is positioned further in the first direction *DR 1* than the first wall 51a (in other words, a position where the fixation member 67 is within reach of a hand of a user positioned outside the machine tool 1B). In this case, the user is able to fix the fixation member 67 to a structure member 11a of the machine tool 1B without entering the machine tool 1B. Also in the above case, the user is able to release the fixing of the fixation member 67 to the structure member 11a without entering the machine tool 1B. It is to be noted that in a state in which the first cover 6 is positioned at the second position P2, the fixation member 67 or a fixture member fixing the fixation member 67 to the structure member 11a is preferably visually recognizable through the first opening OP1 from a position further in the first direction *DR 1* than the first wall 51a. In this case, the user is able to more easily fix the fixation member 67 or release the fixing of the fixation member 67 without entering the machine tool 1B.

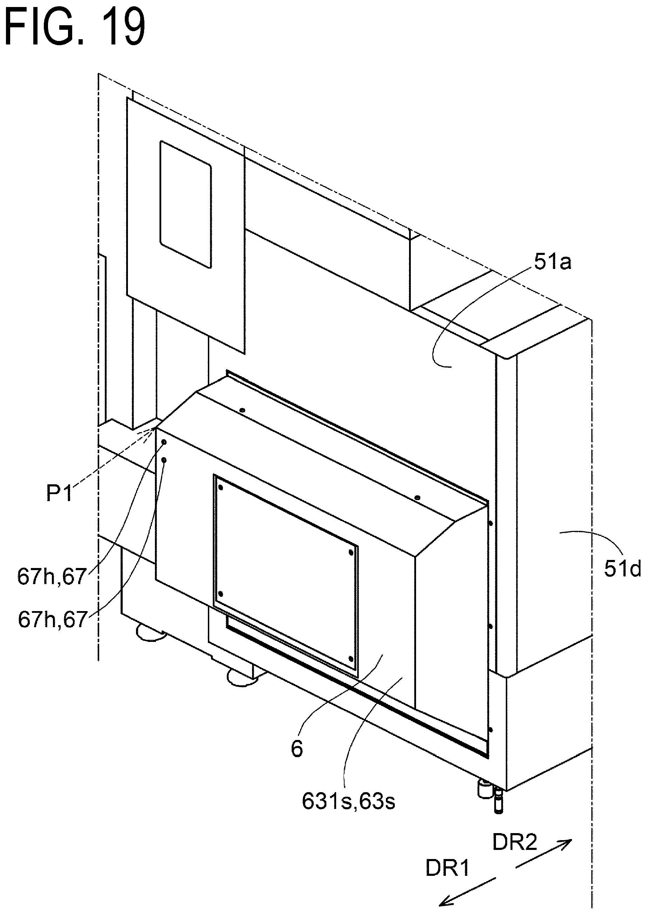

In the example illustrated in FIG. 18, the fixation member 67 is fixed to the structure member 11a via a fixture member (for example, via a bracket 82a and a bolt 81a). In the example illustrated in FIG. 19, the fixation member 67 has first holes 67h. The first holes 67h are each capable of receiving a connection member such as the bolt 81a.

### (Walls 51)

In the example illustrated in FIG. 6, the machine tool 1B includes a plurality of walls 51. The plurality of walls 51 include the first wall 51a, which is provided on the first direction *DR1* side of the machine tool 1B; and the second wall 51b, which is provided at the second direction *DR2* side of the machine tool 1B. The plurality of walls 51 may include a third wall 51c and a fourth wall 51d. The third wall 51c is provided on the third direction *DR3* side of the machine tool 1B. The fourth wall 51d is provided on the fourth direction *DR4* side of the machine tool 1B. Each of the first wall 51a, the second wall 51b, the third wall 51c, and the fourth wall 51d may be made up of a plurality of members. For example, the first wall 51a may include a plurality of plate members or a plurality of panels. Similarly, each of the second wall 51b, the third wall 51c, and the fourth wall 51d may include a plurality of plate members or a plurality of panels.

In the example illustrated in FIG. 6, the machine tool 1B includes a plurality of connection members 86 (for example, a plurality of bolts). The plurality of connection members 86 fix the first cover 6 positioned at the first position P1 to the first wall 51a. In the example illustrated in FIG. 7, the first wall 51a includes a plurality of second holes 51h. The plurality of second holes 51h respectively receive the plurality of connection members 86. In the example illustrated in FIG. 7, some of the plurality of second holes 51h are provided further in the third direction *DR3* than the first opening OP1, and other of the plurality of second holes 51h are provided further in the fourth direction *DR4* than the first opening OP1.

In the example illustrated in FIG. 7, the fourth wall 51d supports an openable-closable door 92. It is to be noted that in a case where the side on which the door 92 is provided is defined as front surface, the fourth wall 51d may be referred to as front wall. It is also to be noted that in a case where in plan view, the direction from the table 2 toward the column 36, which movably supports the tool support member 31, is defined as rearward, the third wall 51c may be referred to as rear wall. In the example illustrated in FIG. 7, the first cover 6 is provided at the first wall 51a, which is different from the rear wall.

In the example illustrated in FIG. 7, the machine tool 1B has at least four walls (the first wall 51a, the second wall 51b, the third wall 51c, and the fourth wall 51d). The machine tool 1B may have five or more walls.

### (Second Wall 51b, Second Cover 7, Second Support Member 56b)

In the examples illustrated in FIGs. 4 and 5, the machine tool 1B includes (1) the second wall 51b, which has a second opening OP2 and is provided further in the second direction *DR2* than the table 2, (2) the second cover 7, which protrudes further in the second direction *DR2* than the second wall 51b through the second opening OP2, and (3) a second support member 56b, which supports the second cover 7 such that the second cover 7 is tiltable to decrease the amount of protrusion of the second cover 7 relative to the second wall 51b. In the examples illustrated in FIGs. 4 and 5, the position of the second cover 7 is changeable between a third position P3 and a fourth position P4. At the third position P3, the second cover 7 closes the second opening OP2 of the second wall 51b. At the fourth position P4, the amount of protrusion of the second cover 7 in the second direction *DR2* relative to the second wall 51b is decreased.

The machine tool 1B includes the second cover 7 in addition to the first cover 6, which is tiltable in a direction toward the table 2. The second cover 7 is tiltable in the direction toward the table 2. In a case where the machine tool 1B includes the second cover 7 in addition to the first cover 6, the machine tool 1B can be more compact in size during transportation of the machine tool 1B.

In the example illustrated in FIG. 4, the second cover 7 is tiltable to cross the workpiece machining region AR1 from the third position P3 toward the fourth position P4 (see broken-line arrow B2). In this case, it is not necessary to provide a dedicated space or a dedicated movement passage for the tilting of the second cover 7.

In the example illustrated in FIG. 4, the second support member 56b supports a lower end portion 7g of the second cover such that the second cover is tiltable. In this case, it is easy for the second cover 7 to tilt to ensure that the lower end portion 7g of the second cover 7 does not interfere with the table 2 and the mover 4.

In the example illustrated in FIG. 4, the second cover 7 has a bottom surface 71s. A height of a position of the bottom surface 71s increases in the second direction *DR2.* In this case, the amount of protrusion of the second cover 7 in the second direction *DR2* relative to the second wall 51b can be easily decreased. For example, when the second cover 7 is moved from the third position P3 to the fourth position P4 (see FIG. 5), causing the second cover 7 to tilt by an angle smaller than 90 degrees suffices.

In the example illustrated in FIG. 5, the second cover 7 positioned at the fourth position P4 contains at least one of a part of the mover 4 and a part of the table 2. In this case, when the second cover 7 is positioned at the fourth position P4, an inner region AR3 of the second cover 7 is effectively utilized.

As exemplified in FIG. 5, the second cover 7 positioned at the fourth position P4 may contain a part of the first linear guide 42, which guides the table 2 to move. Also as exemplified in FIG. 5, the second cover 7 positioned at the fourth position P4 may contain a part of the first drive 43, which moves the table 2 (for example, the motor 432 and a part of the ball screw 431).

In the example illustrated in FIG. 11, the second cover 7 positioned at the third position P3 contains a part of the mover 4 (for example, a part of the second expandable-contractable cover 44b and/or a part of the second aid tracks 45b). In this case, the movable range of the table 2 in a direction parallel to the second direction *DR2* can be expanded using the inner region AR3 of the second cover 7 positioned at the third position P3.

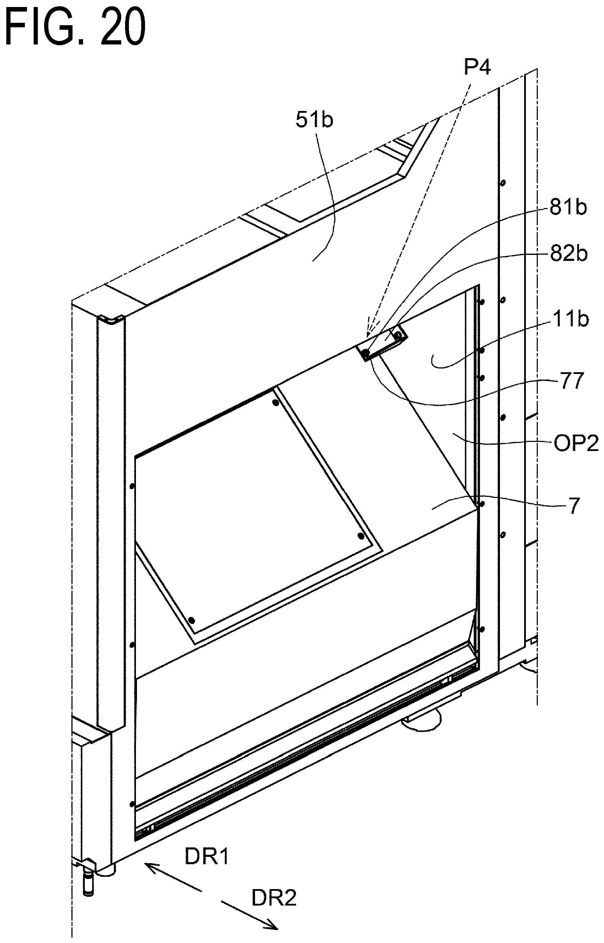

In the example illustrated in FIG. 20, the second cover 7 includes a fixation member 77. The fixation member 77 fixes the second cover 7 to the fourth position P4. Also, in a state in which the second cover 7 is positioned at the fourth position P4, the fixation member 77 is provided at a position where the fixation member 77 is accessible by a user through the second opening OP2 when the user is positioned further in the second direction *DR2* than the second wall 51b. The fixation member 77 is fixed to a structure member 11b via a fixture member (for example, a bracket 82b and a bolt 81b). It is to be noted that in a state in which the second cover 7 is positioned at the fourth position P4, the fixation member 77 or a fixture member fixing the fixation member 77 to the structure member 11b is preferably visually recognizable through the second opening OP2 from a position further in the second direction *DR2* than the second wall 51b.

### (Method of Handling Machine Tool 1)

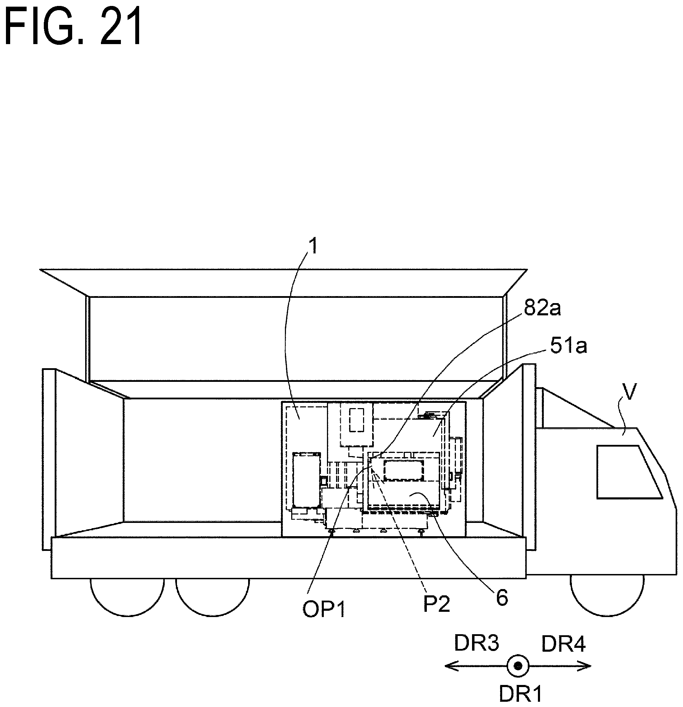

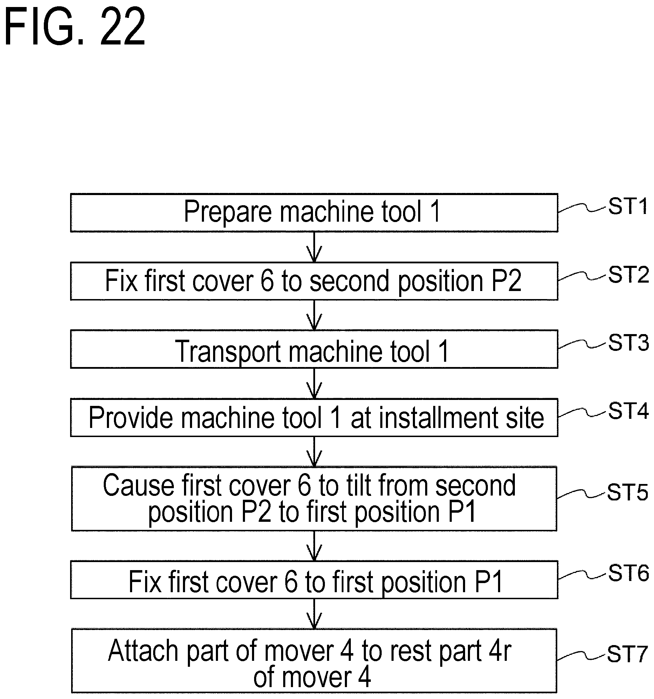

By referring to FIGs. 1 to 22, a method, according to this embodiment, of handling the machine tool 1 will be described. FIG. 21 schematically illustrates a state in which a transporting step is being performed. FIG. 22 is an example flowchart of the method, according to this embodiment, of handling the machine tool 1.

At first step ST1, the machine tool 1 is prepared. First step ST1 is a preparing step. The machine tool 1 prepared in the preparing step may be the machine tool 1A according to the first embodiment, the machine tool 1B according to the second embodiment, or any other machine tool.

As exemplified in FIGs. 2, 5, and other figures, the machine tool 1 prepared in the preparing step includes (1) the table 2, which is configured to move in the first direction *DR1* and support a workpiece, (2) the tool support 3, which supports a tool, (3) the mover 4, which moves the table 2, (4) the first wall 51a, which is provided further in the first direction *DR 1* than the table 2, (5) the first cover 6, which is capable of protruding in the first direction *DR1* through the first opening OP1 of the first wall 51a, and (6) the first support member 56a, supports the first cover 6 such that the first cover 6 is tiltable.

The first support member 56a supports the first cover 6 such that the first cover 6 is tiltable between the first position P1 and the second position P2. When the first cover 6 is positioned at the first position P1, the first opening OP1 of the first wall 51a is closed by the first cover 6. When the first cover 6 is positioned at the second position P2, the amount of protrusion of the first cover 6 in the first direction *DR1* relative to the first wall 51a is decreased.

At second step ST2, the first cover 6 is fixed to the second position P2. Second step ST2 is a first fixing step. The first fixing step includes fixing the fixation member 67 of the first cover 6 (for example, the first holes 67h) to the structure member 11a of the machine tool 1 via a fixture member (see FIG. 18). The first fixing step is preferably performed by a user positioned further in the first direction *DR 1* than the first wall 51a. In other words, in a state in which the first cover 6 is positioned at the second position P2, the fixation member 67 is preferably provided at a position where the fixation member 67 is accessible by a user through the first opening OP1 when the user is positioned further in the first direction DR *1* than the first wall 51a. In this case, the user is able to fix the fixation member 67 to the structure member 11a of the machine tool 1 without entering the machine tool 1. It is to be noted that in a state in which the first cover 6 is positioned at the second position P2, the fixation member 67 or the fixture member fixing the fixation member 67 to the structure member 11a is preferably visually recognizable through the first opening OP1 from a position further in the first direction *DR 1* than the first wall 51a. In this case, the user is able to more easily fix the fixation member 67 to the structure member 11a of the machine tool 1 without entering the machine tool 1.

In a case where the machine tool 1 includes the second cover 7, the method of handling the machine tool 1 may include a step of fixing the second cover 7 to the fourth position P4 (see FIG. 20).

As exemplified in FIG. 21, at third step ST3, the machine tool 1 is transported. Third step ST3 is a transporting step. In the transporting step, the machine tool 1 is transported in a state in which the first cover 6 is fixed to the second position P2, at which the amount of protrusion of the first cover 6 in the first direction *DR1* relative to the first wall 51a is decreased.

In the example illustrated in FIG. 21, the amount of protrusion of the first cover 6 in the first direction *DR1* relative to the first wall 51a is decreased. This ensures that the machine tool 1 can be transported on a smaller size transportation vehicle V. For example, in the transporting step, a track can be used instead of a trailer. In the transporting step, the size of the machine tool 1 in a direction parallel to the first direction *DR1* (more specifically, the width of the machine tool 1) may be 250 cm or less, 240 cm or less, or 230 cm or less.

The machine tool 1 may also be transported on a general-purpose 40-feet container or a general-purpose 20-feet container.

In a case where the machine tool 1 can be transported on a smaller size transportation vehicle or a general-purpose container, the amount of discharge of carbon dioxide discharged during transportation is decreased, and a worker's labor associated with transportation is saved.

In the transporting step, the first cover 6 fixed to the second position P2 preferably contains at least one of a part of the mover 4 and a part of the table 2 (see, if necessary, FIG. 5). In this case, the inner region AR2 of the first cover 6 is effectively utilized during transportation of the machine tool 1.

At fourth step ST4, the machine tool 1 transported at third step ST3 is provided at an installment site of the machine tool (for example, the inside of a building such as a factory). Fourth step ST4 is a providing step.

At fifth step ST5, the first cover 6 is caused to tilt in the first tilting direction *DR7* from the second position P2 toward the first position P1 (see FIG. 5). Fifth step ST5 is a tilting step. In the tilting step, the first cover 6 is caused to tilt from the second position P2 to the first position P1 to increase the amount of protrusion of the first cover 6 in the first direction *DR1* relative to the first wall 51a.

The tilting step preferably includes causing the first cover 6 to tilt to cross the workpiece machining region AR1. In a case where the workpiece machining region AR1 is utilized as the movement passage of the first cover 6, it is not necessary to withdraw any member from the movement passage of the first cover 6 or a smaller number of members needs to be withdrawn from the movement passage of the first cover 6.

In a case where the machine tool 1 includes the second cover 7, the method of handling the machine tool 1 may include causing the second cover 7 to tilt from the fourth position P4 to the third position P3 to increase the amount of protrusion of the second cover 7 in the second direction *DR2* relative to the second wall 51b (see broken-line arrow B3 in FIG. 5).

At sixth step ST6, the first cover 6 is fixed to the first position P1. Sixth step ST6 is a second fixing step. The second fixing step includes fixing the first cover 6 to the first wall 51a. In the example illustrated in FIG. 6, the second fixing step includes fixing the first cover 6 to the first wall 51a via the connection members 86.

In a case where the machine tool 1 includes the second cover 7, the method of handling the machine tool 1 may include fixing the second cover 7 to the third position P3.

As exemplified in FIG. 5, at sixth step ST6 (more specifically, when the first cover 6 is caused to tilt in the first tilting direction *DR7*), there may be a case where a part of the mover 4 has been removed from the rest part 4r of the mover 4. In this case, at seventh step ST7, the part of the mover 4 is attached to the rest part 4r of the mover 4. Seventh step ST7 is an attaching step.

In the example illustrated in FIG. 11, the attaching step (seventh step ST7) includes attaching at least a part of the first expandable-contractable cover 44a and/or at least a part of the first aid tracks 45a to the rest part 4r of the mover 4. Additionally, the attaching step (seventh step ST7) may include attaching at least a part of the second expandable-contractable cover 44b and/or at least a part of the second aid tracks 45b to the rest part 4r of the mover 4.

In the example illustrated in FIG. 11, the part 4s of the mover 4 to be attached to the rest part 4r of the mover 4 is provided in the inner region AR2 of the first cover 6 positioned at the first position P1. Also, another part 4q of the mover 4 to be attached to the rest part 4r of the mover 4 is provided in the inner region AR3 of the second cover 7 positioned at the third position P3. In this case, utilizing the inner region AR2 of the first cover 6 or the inner region AR3 of the second cover 7 ensures that the movable range of the table 2 is expanded in the direction parallel to the first direction *DR1.*

The present invention will not be limited to the above-described and/or modifications; i.e. the scope of the present invention is defined by the appended claims.

### Reference Signs List

1, 1A, 1B ... Machine tool, 2 ... Table, 2p ... Part of table, 3 ... Tool support, 4 ... Mover, 4p, 4q, 4s ... Part of mover, 4r ... Rest part of mover, 6 ... First cover, 6e ... Upper end portion, 6g ... Lower end portion, 7 ... Second cover, 7g ... Lower end, 11a, 11b ... Structure member, 31 ... Tool support member, 35 ... Support member mover, 36 ... Column, 37 ... Linear guide, 38 ... Drive, 41 ... Table support member, 42 ... First linear guide, 43 ... First drive, 44a ... First expandable-contractable cover, 44b ... Second expandable-contractable cover, 45a ... First aid track, 45b ... Second aid track, 46 ... Second table support member, 48 ... Second drive, 49a ... Third expandable-contractable cover, 49b ... Fourth expandable-contractable cover, 51 ... Wall, 51a ... First wall, 51b ... Second wall, 51c ... Third wall, 51d ... Fourth wall, 51h ... Second hole, 56a ... First support member, 56b ... Second support member, 57 ... Lower fluid leakage guard, 58 ... Upper fluid leakage guard, 60b ... First hook, 60n ... Inner surface, 60u ... Outer surface, 61 ... Bottom wall, 61n ... Inner surface, 61s ... Bottom surface, 62s ... Upper surface, 63s ... Side surface, 65 ... Protrusion, 66 ... Stopper, 67 ... Fixation member, 67h ... First hole, 71s ... Bottom surface, 77 ... Fixation member, 81a, 81b ... Bolt, 82a, 82b ... Bracket, 86 ... Connection member, 91 ... Base, 92 ... Door, 93 ... Nozzle, 431 ... Ball screw, 432 ... Motor, 561a ... Pin member, 631s ... First end surface, 632s ... Third direction side surface, 633s ... Fourth direction side surface, AR1 ... Workpiece machining region, AR2 ... Inner region of first cover, AR3 ... Inner region of second cover, OP 1 ... First opening, OP2 ... Second opening, T ... Tool, V ... Transportation vehicle, W ... Workpiece

## Claims

1. A machine tool (1, 1A, 1B) comprising:
a table (2) configured to support a workpiece (W) and move in a first direction (DR1) and a second direction (DR2) opposite to the first direction (DR1);
a tool support (3) configured to support a tool (T) for machining the workpiece (W);
a mover (4) configured to move the table (2);
a first wall (51a) provided further in the first direction (DR1) than the table (2) and having a first opening (OP1);
a first cover (6) protruding further in the first direction (DR1) than the first wall (51a) through the first opening (OP1);
an openable-closable door (92); and
a first support member (56a) supporting the first cover (6) such that the first cover (6) is tiltable to decrease an amount of protrusion of the first cover (6) relative to the first wall (51a),
wherein the first cover (6) is changeable in position between:
a first position (P1) at which the first opening (OP1) of the first wall (51a) is closed; and
a second position (P2) at which the amount of protrusion of the first cover (6) in the first direction (DR1) relative to the first wall (51a) is decreased,
**characterized in that**
the first cover (6) being not the openable-closable door (92) is tiltable from the first position (P1) toward the second position (P2) to cross a workpiece machining region (AR1) such that the workpiece machining region (AR1) becomes a temporary unused region.

2. The machine tool (1, 1A, 1B) according to claim 1, wherein the first cover (6) positioned at the second position (P2) contains at least one of a part (4p, 4q, 4s) of the mover (4) and a part (2p) of the table (2).

3. The machine tool (1, 1A, 1B) according to claim 1 or 2, wherein a part (4p, 4q, 4s) of the mover (4) is provided in an inner region (AR2) of the first cover (6) positioned at the first position (P1).

4. The machine tool (1, 1A, 1B) according to any one of claims 1 to 3,
wherein the first cover (6) comprises a fixation member (67) fixing the first cover (6) to the second position (P2), and
wherein when the first cover (6) is positioned at the second position (P2) the fixation member (67) is provided at a position accessible by a user, positioned further in the first direction (DR1) than the first wall (51a), through the first opening (OP1).

5. The machine tool (1, 1A, 1B) according to any one of claims 1 to 4, wherein the first support member (56a) supports a lower end portion (6g) of the first cover (6) such that the first cover (6) is tiltable.

6. The machine tool (1, 1A, 1B) according to claim 5,
wherein the first cover (6) has a bottom surface (61s), and
wherein a height of a position of the bottom surface (61a) increases in the first direction (DR1).

7. The machine tool (1, 1A, 1B) according to claim 5 or 6,
further comprising a fluid leakage guard (57) configured to prevent a leakage of a coolant to outside the machine tool (1, 1A, 1B) through a gap between the lower end portion (6g) of the first cover (6) and the first wall (51a), and
wherein the fluid leakage guard (57) is attachable and detachable to and from the lower end portion (6g) of the first cover (6).

8. The machine tool (1, 1A, 1B) according to any one of claims 1 to 7, further comprising:
a second wall (51b) provided further in the second direction (DR1) than the table (2) and having a second opening (OP2);
a second cover (7) protruding further in the second direction (DR1) than the second wall (51b) through the second opening (OP2); and
a second support member (56b) configured to support the second cover (7) such that the second cover (7) is tiltable to decrease an amount of protrusion of the second cover (7) relative to the second wall (56b).

9. A method of handling a machine tool (1, 1A, 1B), the method comprising:
a step of preparing a machine tool (1, 1A, 1B), the machine tool (1, 1A, 1B) comprising a table (2) configured to support a workpiece (W) and move in a first direction (DR1), a tool support (3) configured to support a tool (T), a mover (4) configured to move the table (2), a first wall (51a) provided further in the first direction (DR1) than the table (2), a first cover (6) configured to protrude in the first direction (DR1) through a first opening (OP1) of the first wall (51a), an openable-closable door (92), and a first support member (56a) supporting the first cover (6) being not the openable-closable door (92) such that the first cover (6) is tiltable between a first position (P1) at which the first opening (OP1) of the first wall (51a) is closed and a second position (P2) at which an amount of protrusion of the first cover (6) in the first direction (DR1) relative to the first wall (51a) is decreased;
a step of transporting the machine tool (1, 1A, 1B) in a state in which the first cover (6) is fixed to the second position (P2), wherein in the second position (P2) the first cover (6) crosses a workpiece machining region (AR1) such that the workpiece machining region (AR1) becomes a temporary unused region;
a step of installing the transported machine tool (1, 1A, 1B) at an installment site;
a tilting step of causing the first cover (6) to tilt from the second position (P2) to the first position (P1) to increase the amount of protrusion of the first cover (6) in the first direction (DR1) relative to the first wall (51a); and
a step of fixing the first cover (6) to the first position (P).

## Patentansprüche

1. Werkzeugmaschine (1, 1A, 1B), die Folgendes umfasst:
einen Tisch (2), der ausgelegt ist, um ein Werkstück (W) zu tragen und sich in einer ersten Richtung (DR1) sowie in einer zweiten Richtung (DR2) entgegengesetzt zur ersten Richtung (DR1) zu bewegen;
eine Werkzeugaufnahme (3), die ausgelegt ist, um ein Werkzeug (T) zur Bearbeitung des Werkstücks (W) zu tragen;
einen Antrieb (4), der ausgelegt ist, um den Tisch (2) zu bewegen;
eine erste Wand (51a), die in der ersten Richtung (DR1) weiter als der Tisch vorgesehen ist (2) und eine erste Öffnung (OP1) aufweist;
eine erste Abdeckung (6), die durch die erste Öffnung (OP1) in der ersten Richtung (DR1) weiter vorsteht als die erste Wand (51a);
eine Tür (92), die sich öffnen und schließen lässt; und
ein erstes Stützelement (56a), das die erste Abdeckung (6) stützt, so dass die erste Abdeckung (6) schwenkbar ist, um das Ausmaß des Vorstehens der ersten Abdeckung (6) relativ zur ersten Wand (51a) zu verringern,
wobei die erste Abdeckung (6) zwischen folgenden Positionen veränderbar ist:
einer ersten Position (P1), in der die erste Öffnung (OP1) der ersten Wand (51a) geschlossen ist; und
einer zweiten Position (P2), in der das Ausmaß des Vorstehens der ersten Abdeckung (6) in der ersten Richtung (DR1) relativ zur ersten Wand (51a) verringert ist,
**dadurch gekennzeichnet, dass**
die erste Abdeckung (6), die nicht die Tür (92) ist, die sich öffnen und schließen lässt, von der ersten Position (P1) in Richtung der zweiten Position (P2) schwenkbar ist, um einen Werkstück-Bearbeitungsbereich (AR1) zu passieren, so dass der Werkstück-Bearbeitungsbereich (AR1) zu einem vorübergehenden, ungenutzten Bereich wird.

2. Werkzeugmaschine (1, 1A, 1B) nach Anspruch 1, wobei die in der zweiten Position (P2) angeordnete erste Abdeckung (6) mindestens einen Teil (4p, 4q, 4s) des Antriebs (4) und/oder einen Teil (2p) des Tisches (2) enthält.

3. Werkzeugmaschine (1, 1A, 1B) nach Anspruch 1 oder 2, wobei ein Teil (4p, 4q, 4s) des Antriebs (4) in einem inneren Bereich (AR2) der an der ersten Position (P1) angeordneten ersten Abdeckung (6) vorgesehen ist.

4. Werkzeugmaschine (1, 1A, 1B) nach einem der Ansprüche 1 bis 3,
wobei die erste Abdeckung (6) ein Befestigungselement (67) umfasst, das die erste Abdeckung (6) an der zweiten Position (P2) befestigt, und
wobei, wenn sich die erste Abdeckung (6) an der zweiten Position (P2) befindet, das Befestigungselement (67) an einer für einen Benutzer durch die erste Öffnung (OP1) zugänglichen Position vorgesehen ist, die weiter in der ersten Richtung (DR1) liegt als die erste Wand (51a).

5. Werkzeugmaschine (1, 1A, 1B) nach einem der Ansprüche 1 bis 4, wobei das erste Stützelement (56a) einen unteren Endabschnitt (6g) der ersten Abdeckung (6) derart stützt, dass die erste Abdeckung (6) schwenkbar ist.

6. Werkzeugmaschine (1, 1A, 1B) nach Anspruch 5,
wobei die erste Abdeckung (6) eine Unterseite (61a) aufweist und
wobei die Höhe einer Position der Unterseite (61a) in der ersten Richtung (DR1) zunimmt.

7. Werkzeugmaschine (1, 1A, 1B) nach Anspruch 5 oder 6,
die ferner einen Flüssigkeitsauslaufschutz (57) umfasst, der ausgelegt ist, um ein Austreten eines Kühlmittels aus der Werkzeugmaschine (1, 1A, 1B) nach außen durch einen Spalt zwischen dem unteren Endabschnitt (6g) der ersten Abdeckung (6) und der ersten Wand (51a) zu verhindern, und
wobei der Flüssigkeitsauslaufschutz (57) am unteren Endabschnitt (6g) der ersten Abdeckung (6) anbringbar und von diesem abnehmbar ist.

8. Werkzeugmaschine (1, 1A, 1B) nach einem der Ansprüche 1 bis 7, die ferner Folgendes umfasst:
eine zweite Wand (51b), die in der zweiten Richtung (DR1) weiter als der Tisch (2) vorgesehen ist und eine zweite Öffnung (OP2) aufweist;
eine zweite Abdeckung (7), die durch die zweite Öffnung (OP2) in der zweiten Richtung (DR1) weiter als die zweite Wand (51b) vorsteht; und
ein zweites Stützelement (56b), das ausgelegt ist, um die zweite Abdeckung (7) derart zu stützen, dass die zweite Abdeckung (7) neigbar ist, um ein Ausmaß des Vorstehens der zweiten Abdeckung (7) relativ zur zweiten Wand (56b) zu verringern.

9. Verfahren zum Betreiben einer Werkzeugmaschine (1, 1A, 1B), wobei das Verfahren folgende Schritte umfasst:
einen Schritt zum Vorbereiten einer Werkzeugmaschine (1, 1A, 1B), wobei die Werkzeugmaschine (1, 1A, 1B) Folgendes umfasst: einen Tisch (2), der ausgelegt ist, um ein Werkstück (W) zu tragen und sich in einer ersten Richtung (DR1) zu bewegen, eine Werkzeugaufnahme (3), die ausgelegt ist, um ein Werkzeug (T) zu tragen, einen Antrieb (4), der ausgelegt ist, um den Tisch (2) zu bewegen, eine erste Wand (51a), die in der ersten Richtung (DR1) weiter als der Tisch (2) vorgesehen ist, eine erste Abdeckung (6), die ausgelegt ist, um in der ersten Richtung (DR1) durch eine erste Öffnung (OP1) der ersten Wand (51a) vorzustehen, eine Tür (92), die sich öffnen und schließen lässt, und ein erstes Stützelement (56a), das die erste Abdeckung (6) trägt, wobei es sich nicht um die Tür (92), die sich öffnen und schließen lässt, handelt, so dass die erste Abdeckung (6) zwischen einer ersten Position (P1), in der die erste Öffnung (OP1) der ersten Wand (51a) geschlossen ist, und einer zweiten Position (P2), in der ein Ausmaß des Vorstehens der ersten Abdeckung (6) in der ersten Richtung (DR1) relativ zur ersten Wand (51a) verringert ist, schwenkbar ist;
einen Schritt des Transportierens der Werkzeugmaschine (1, 1A, 1B) in einem Zustand, in dem die erste Abdeckung (6) in der zweiten Position (P2) fixiert ist, wobei in der zweiten Position (P2) die erste Abdeckung (6) einen Werkstück-Bearbeitungsbereich (AR1) kreuzt, so dass der Werkstück-Bearbeitungsbereich (AR1) zu einem vorübergehenden, ungenutzten Bereich wird;
einen Schritt des Aufstellens der transportierten Werkzeugmaschine (1, 1A, 1B) an einem Aufstellungsort;
einen Schwenkschritt, bei dem die erste Abdeckung (6) von der zweiten Position (P2) in die erste Position (P1) geschwenkt wird, um das Ausmaß des Vorstehens der ersten Abdeckung (6) in der ersten Richtung (DR1) relativ zur ersten Wand (51a) zu vergrößern; und
einen Schritt zum Fixieren der ersten Abdeckung (6) in der ersten Position (P).

## Revendications

1. Machine-outil (1, 1A, 1B) comprenant :
une table (2) configurèe pour supporter une pièce à usiner (W) et se déplacer dans une première direction (DR1) et dans une deuxième direction (DR2) opposée à la première direction (DR1) ;
un support d'outil (3) configuré pour supporter un outil (T) destiné à l'usinage de la pièce à usiner (W) ;
un dispositif de déplacement (4) configuré pour déplacer la table (2) ;
une première paroi (51a) prévue plus en avant dans la première direction (DR1) que la table (2) et comportant une première ouverture (OP1) ;
un premier couvercle (6) faisant saillie plus en avant dans la première direction (DR1) que la première paroi (51a) à travers la première ouverture (OP1) ;
une porte ouvrable et fermable (92) ; et
un premier élément de support (56a) supportant le premier couvercle (6) de telle sorte que le premier couvercle (6) puisse être incliné pour réduire un degrés de saillie du premier couvercle (6) par rapport à la première paroi (51a),
dans lequel le premier couvercle (6) peut changer de position entre :
une première position (P1) dans laquelle la première ouverture (OP1) de la première paroi (51a) est fermée ; et
une deuxième position (P2) dans laquelle le degré de la saillie du premier couvercle (6) dans la première direction (DR1) par rapport à la première paroi (51a) est réduite,
**caractérisé en ce que**
le premier couvercle (6), qui n'est pas la porte ouvrable-fermable (92), est inclinable de la première position (P1) vers la deuxième position (P2) pour traverser une zone d'usinage de la pièce à usiner (AR1) de telle sorte que la zone d'usinage de la pièce à usiner (AR1) devienne une zone temporairement inutilisée.

2. Machine-outil (1, 1A, 1B) selon la revendication 1, dans laquelle le premier couvercle (6) positionné à la deuxième position (P2) contient au moins une partie (4p, 4q, 4s) du dispositif de déplacement (4) et/ou une partie (2p) de la table (2).

3. Machine-outil (1, 1A, 1B) selon la revendication 1 ou 2, dans laquelle une partie (4p, 4q, 4s) du dispositif de déplacement (4) est située dans une zone intérieure (AR2) du premier couvercle (6) positionné à la première position (P1).

4. Machine-outil (1, 1A, 1B) selon l'une quelconque des revendications 1 à 3,
dans laquelle le premier couvercle (6) comprend un élément de fixation (67) fixant le premier couvercle (6) à la deuxième position (P2), et
dans laquelle, lorsque le premier couvercle (6) est positionné à la deuxième position (P2), l'élément de fixation (67) est prévu à une position accessible à un utilisateur, prévu plus loin dans la première direction (DR1) que la première paroi (51a), à travers la première ouverture (OP1).

5. Machine-outil (1, 1A, 1B) selon l'une quelconque des revendications 1 à 4, dans laquelle le premier élément de support (56a) supporte une partie d'extrémité inférieure (6g) du premier couvercle (6) de telle sorte que le premier couvercle (6) puisse basculer.

6. Machine-outil (1, 1A, 1B) selon la revendication 5,
dans laquelle le premier couvercle (6) présente une surface inférieure (61a), et
dans laquelle une hauteur d'une position de la surface inférieure (61a) augmente dans la première direction (DR1).

7. Machine-outil (1, 1A, 1B) selon la revendication 5 ou 6,
comprenant en outre un dispositif de protection contre les fuites de fluide (57) configuré pour empêcher une fuite de liquide de refroidissement vers l'extérieur de la machine-outil (1, 1A, 1B) à travers un écart entre la partie d'extrémité inférieure (6g) du premier couvercle (6) et la première paroi (51a), et
dans laquelle le dispositif de protection contre les fuites de fluide (57) peut être fixé à la partie d'extrémité inférieure (6g) du premier couvercle (6) et en être détaché.

8. Machine-outil (1, 1A, 1B) selon l'une quelconque des revendications 1 à 7, comprenant en outre :
une deuxième paroi (51b) prévue plus loin dans la deuxième direction (DR1) que la table (2) et comportant une deuxième ouverture (OP2) ;
un deuxième couvercle (7) faisant saillie plus loin dans la deuxième direction (DR1) que la deuxième paroi (51b) à travers la deuxième ouverture (OP2) ; et
un deuxième élément de support (56b) configuré pour supporter le deuxième couvercle (7) de telle sorte que le deuxième couvercle (7) puisse être incliné afin de réduire une distance de saillie du deuxième couvercle (7) par rapport à la deuxième paroi (56b).

9. Procédé de manipulation d'une machine-outil (1, 1A, 1B), le procédé comprenant :
une étape de préparation d'une machine-outil (1, 1A, 1B), la machine-outil (1, 1A, 1B) comprenant une table (2) configurée pour supporter une pièce à usiner (W) et se déplacer dans une première direction (DR1), un support d'outil (3) configuré pour supporter un outil (T), un dispositif de déplacement (4) configuré pour déplacer la table (2), une première paroi (51a) prévue plus loin dans la première direction (DR1) que la table (2), un premier couvercle (6) configuré pour faire saillie dans la première direction (DR1) à travers une première ouverture (OP1) de la première paroi (51a), une porte ouvrable-fermable (92), et un premier élément de support (56a) supportant le premier couvercle (6) qui n'est pas la porte ouvrable-fermable (92) de telle sorte que le premier couvercle (6) puisse basculer entre une première position (P1) dans laquelle la première ouverture (OP1) de la première paroi (51a) est fermée et une deuxième position (P2) dans laquelle un degrés de saillie du premier couvercle (6) dans la première direction (DR1) par rapport à la première paroi (51a) est réduite ;
une étape consistant à transporter la machine-outil (1, 1A, 1B) dans un état dans lequel le premier couvercle (6) est fixé dans la deuxième position (P2), dans laquelle, dans la deuxième position (P2), le premier couvercle (6) traverse une zone d'usinage de la pièce d'usinage (AR1) de telle sorte que la zone d'usinage de la pièce d'usinage (AR1) devienne une zone temporairement inutilisée ;
une étape consistant à installer la machine-outil transportée (1, 1A, 1B) à un site d'installation ;
une étape d'inclinaison consistant à faire basculer le premier couvercle (6) de la deuxième position (P2) vers la première position (P1) afin d'augmenter le degrés de la saillie du premier couvercle (6) dans la première direction (DR1) par rapport à la première paroi (51a) ; et
une étape de fixation du premier couvercle (6) à la première position (P).
